(19) Europäisches Patentamt
European Patent Office
Office européen des brevets

(11) EP 2 321 614 B1

(12) EUROPÄISCHE PATENTSCHRIFT

(45) Veröffentlichungstag und Bekanntmachung des Hinweises auf die Patenterteilung:
29.07.2015 Patentblatt 2015/31

(21) Anmeldenummer: 09778057.1

(22) Anmeldetag: 22.08.2009

(51) Int Cl.:
G01B 11/00 (2006.01)     G01S 17/89 (2006.01)
G01B 11/24 (2006.01)

(86) Internationale Anmeldenummer:
PCT/EP2009/006108

(87) Internationale Veröffentlichungsnummer:
WO 2010/025847 (11.03.2010 Gazette 2010/10)

(54) **VORRICHTUNG UND VERFAHREN ZUM VERMESSEN EINER OBERFLÄCHE**

DEVICE AND METHOD FOR MEASURING A SURFACE

PROCÉDÉ ET DISPOSITIF DE MESURE D'UNE SURFACE

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR

(30) Priorität: 02.09.2008 DE 102008045387

(43) Veröffentlichungstag der Anmeldung:
18.05.2011 Patentblatt 2011/20

(73) Patentinhaber: Carl Zeiss AG
73447 Oberkochen (DE)

(72) Erfinder:
• ALVAREZ DIEZ, Cristina
73431 Aalen (DE)
• HÖLLER, Frank
73434 Aalen (DE)
• SPRUCK, Bernd
73563 Mögglingen (DE)
• TREMONT, Marc
73614 Schorndorf (DE)

(74) Vertreter: Sticht, Andreas
Kraus & Weisert
Patentanwälte PartGmbB
Thomas-Wimmer-Ring 15
80539 München (DE)

(56) Entgegenhaltungen:
EP-A2- 1 903 302        DE-A1- 4 439 298
DE-T5-112005 001 980    US-A- 4 818 100
US-A- 4 856 893         US-A1- 2008 180 650

• MINOSHIMA K ET AL: "HIGH-ACCURACY MEASUREMENT OF 240-M DISTANCE IN AN OPTICAL TUNNEL BYUSE OF A COMPACT FEMTOSECOND LASER" APPLIED OPTICS, OPTICAL SOCIETY OF AMERICA, US LNKD- DOI: 10.1364/AO.39.005512, Bd. 39, Nr. 30, 20. Oktober 2000 (2000-10-20), Seiten 5512-5517, XP000981158 ISSN: 0003-6935 in der Anmeldung erwähnt

EP 2 321 614 B1

**Beschreibung**

Die vorliegende Erfindung betrifft eine Vorrichtung und ein Verfahren zum Vermessen einer Oberfläche. Insbesondere betrifft die vorliegende Erfindung eine Vorrichtung und ein Verfahren zum Vermessen einer Oberfläche unter Verwendung eines optischen Messverfahrens.

Die Messung einer Oberflächenkontur von dreidimensionalen Körpern hat vielfache Anwendungen, beispielsweise bei der Digitalisierung von Räumen, wie sie für Statikfragen im Bauingenieurwesen oder für Multimediaanwendungen eingesetzt wird, oder bei der quantitativen Qualitätskontrolle, insbesondere in der industriellen Produktion. Hierbei stellt die hochgenaue Vermessung sehr großer Objekte mit einer typischen Abmessung von einigen Metern mit einer Auflösung im Mikrometerbereich eine Herausforderung dar.

Bei der Vermessung von Objektoberflächen mit Hilfe geometrisch-optischer Verfahren, wie beispielsweise der Streifenprojektion und der Deflektometrie, besteht eine Kopplung zwischen lateraler Auflösung und Tiefenschärfe. Diese führt dazu, dass die Optimierung der einen Variablen zur Verschlechterung der jeweils anderen führt, und somit laterale Genauigkeiten im Mikrometerbereich über Schärfentiefen von einigen Metern schwer erreichbar sind.

Taktile Koordinatenmessmaschinen erreichen hohe Genauigkeiten in Volumina von einigen Kubikmetern. Diese Messungen können aber zeitintensiv sein, insbesondere wenn Positionen einer großen Zahl von über die Messkörperoberfläche verteilten Punkten bestimmt werden sollen. Koordinatenmessmaschinen für Objekte mit typischen Abmessungen im Meterbereich sind massive, nicht mobile Geräte. Die Verwendung einer taktile Messung ist außerdem bei empfindlichen Oberflächen nicht oder nur bedingt anwendbar.

Laserweglängenmessgeräte erlauben die Bestimmung eines Abstands eines Objekts. In K. Minoshima and H. Matsumoto, "High-accuracy measurement of 240-m distance in an optical tunnel by use of a compact femtosecond laser", Applied Optics, Vol. 39, No. 30, pp. 5512-5517 (2000) wird eine Distanzmessung unter Verwendung von Frequenzkämmen unter Laborbedingungen beschrieben. Die Messung kann zwar mit hoher Genauigkeit erfolgen, ist aber auf eine Dimension beschränkt und erfordert eine Lichtreflexion an dem Objekt.

Die EP 1 903 302 A2 beschreibt eine optische Vorrichtung, die eine sinusförmige Amplitudenmodulation mit einer gepulsten Lichtausgabe einer Lichtquelle kombiniert, um einen Objektabstand zu messen. In der DE 11 2005 001 980 T5 wird ein Verfahren und eine Vorrichtung beschrieben, bei dem bzw. der Frequenzkammlicht in ein optisches Interferometer eingekoppelt wird, um eine Abstandsmessung durchzuführen. Durch Regelung eines Modulationssignals wird eine Beobachtungstiefe in den Objekt geregelt. Weder bei dem Verfahren der EP 1 903 302 A2 noch bei dem Verfahren der DE 11 2005 001 980 T5 ist die Oberfläche eines Objekts vermessbar.

Daneben ist aus US 4 856 893 und US 4 818 100 bekannt, eine Oberfläche mittels einer Laserabstandsmessvorrichtung mit Lichtlenkeinrichtung und einen einzelnen Detektor zu vermessen. Dabei wird ein Lichtsignal mit einer Repetitionsrate verwendet und der Abstand wird durch Messung der Phasenverschiebung zu einem Referenzsignal bei einem Vielfachen der Repetitionsrate bestimmt.

Der vorliegenden Erfindung liegt die Aufgabe zugrunde, eine verbesserte Vorrichtung und ein verbessertes Verfahren zum Vermessen einer Oberfläche anzugeben. Insbesondere liegt der Erfindung die Aufgabe zugrunde, eine derartige Vorrichtung und ein derartiges Verfahren anzugeben, die bzw. das es erlaubt, eine Oberfläche mit hoher Auflösung zu vermessen, wobei die Messung berührungslos erfolgt und unter Verwendung einer verhältnismäßig kompakten Vorrichtung vornehmbar ist.

Erfindungsgemäß wird diese Aufgabe gelöst durch Vorrichtungen und ein Verfahren, wie sie in den unabhängigen Ansprüchen angegeben sind. Die abhängigen Ansprüche definieren vorteilhafte oder bevorzugte Ausführungsbeispiele.

Die angegebene Vorrichtungen und das angegebene Verfahren erlauben es, eine Oberfläche zu vermessen. Unter dem Vermessen einer Oberfläche wird hier typischerweise die Bestimmung von drei räumlichen Koordinaten, sofern die Messung nur in einer Ebene erfolgt auch die Bestimmung von zwei räumlichen Koordinaten, von mehreren Oberflächenbereichen der Oberfläche verstanden. Die Abmessungen der Oberflächenbereiche können dabei sehr klein sein und sind typischerweise durch eine Querschnittsfläche eines Lichtstrahls an der Oberfläche bestimmt.

Eine Vorrichtung zum Vermessen einer Oberfläche nach einem Aspekt der Erfindung umfasst eine Lichtquelle zum Erzeugen einer Folge von Lichtpulsen mit einer Repetitionsrate, eine Lichtlenkeinrichtung, die kontrollierbar ist, um die Folge von Lichtpulsen auf einen Oberflächenbereich der Oberfläche zu lenken, der aus mehreren Oberflächenbereichen wählbar ist, eine Detektoranordnung, die eingerichtet ist, um wenigstens ein von dem Oberflächenbereich gestreutes und/oder reflektiertes Lichtsignal zu empfangen, und eine Auswerteschaltung, die mit der Detektoranordnung gekoppelt ist, dadurch gekennzeichnet, dass die Detektoranordnung eine Mehrzahl von Detektoren umfasst, die eingerichtet sind, um eine Mehrzahl von von dem Oberflächenbereich in unterschiedliche Richtungen gestreuten Lichtsignalen zu empfangen, und dass die Auswerteschaltung eingerichtet ist, um zum Bestimmen einer Position des Oberflächenbereichs für jedes Lichtsignal der Mehrzahl von Lichtsignalen eine Phasendifferenz zwischen einem aus der Folge von Lichtpulsen abgeleiteten Referenzsignal und einer Signalkomponente des Lichtsignals zu ermitteln, wobei die Signalkomponente jeweils eine Frequenz aufweist, die dem Vielfachen der Repetitionsrate entspricht.

Das Referenzsignal kann dabei jedes Signal sein, das als Referenz für die Bestimmung einer Phasendifferenz dienen kann. Beispielsweise kann das Referenzsignal von einem Synchronisationsausgang der Lichtquelle bereitgestellt oder durch einen Referenzsignaldetektor aufgenommen werden.

Als Signalkomponente wird hierbei eine spektrale Komponente des Lichtsignals als Funktion der Zeit, d.h. der Lichtintensität als Funktion der Zeit, bezeichnet. Das Referenzsignal kann im Wesentlichen die Frequenz aufweisen, die dem Vielfachen der Repetitionsrate entspricht, oder das Referenzsignal kann eine Referenzsignalkomponente, d. h. eine spektrale Komponente, mit dieser Frequenz aufweisen, wobei die Phasendifferenz als Phasendifferenz zwischen der Signalkomponente und der Referenzsignalkomponente bestimmt werden kann.

Diese Vorrichtung erlaubt es, eine Oberfläche berührungslos zu vermessen. Da die Phasendifferenz basierend auf einer Signalkomponente mit einer Frequenz bestimmt wird, die einer Oberwelle der Repetitionsrate entspricht, kann eine hohe Ortsauflösung erzielt werden, da die höhere Frequenz bei einem gegebenen Weglängenunterschied zu einer größeren Phasendifferenz führt.

Die Lichtlenkeinrichtung kann derart kontrolliert werden, dass mehrere Folgen von Lichtpulsen sequentiell auf verschiedene Oberflächenbereiche gelenkt werden, beispielsweise indem ein Spiegel im Lichtweg der Folge von Lichtpulsen verkippt wird. Für jeden der Oberflächenbereiche kann die Position basierend auf einer Phasendifferenz einer Signalkomponente der gestreuten Folge von Lichtpulsen mit einer Fre-quenz bestimmt werden, die ein Vielfaches der Repetitionsrate ist, um eine bessere Ortsauflösung zu erreichen. Durch die sequentielle Positionsbestimmung für mehrere Oberflächenbereiche wird die Oberfläche vermessen.

Die Detektoranordnung umfasst dabei eine Mehrzahl von Detektoren, die eine Mehrzahl von von dem Oberflächenbereich in unterschiedliche Richtungen gestreuten Lichtsignalen empfangen. Die Auswerteschaltung kann dann eine Mehrzahl von Phasendifferenzen ermitteln, die der Mehrzahl von Lichtsignalen zugeordnet ist, wobei jede der Phasendifferenzen für eine Signalkomponente des entsprechenden Lichtsignals ermittelt wird, deren Frequenz ein Vielfaches der Repetitionsrate ist. Da diese Detektoranordnung eingerichtet ist, um Lichtsignale zu erfassen, die von dem Oberflächenbereich in unterschiedliche Richtungen gestreut oder reflektiert wurden, kann der Abstand des Oberflächenbereichs zu mehreren Referenzpunkten bestimmt werden. Basierend auf den so bestimmten mehreren Abständen kann, beispielsweise durch Trilateration, die Position des Oberflächenbereichs ermittelt werden.

Die Detektoranordnung kann wenigstens drei Detektoren aufweisen. In diesem Fall kann die Auswerteschaltung basierend auf den ermittelten wenigstens drei Phasendifferenzen die Position des Oberflächenbereichs bestimmen. Die Position des Oberflächenbereichs kann mit Methoden wie Trilateration bestimmt werden.

Zusätzliche Detektoren können vorgesehen werden, um eine Genauigkeit der Positionsbestimmung zu erhö-hen. Die Detektoranordnung kann z.B. wenigstens vier Detektoren umfassen. Die Messung von vier Phasendifferenzen erlaubt es, die Positionsbestimmung selbst dann vorzunehmen, wenn eine Einstrahlposition, von der aus die Folge von Lichtpulsen auf den Flächenbereich eingestrahlt wird, nicht bekannt ist. Die Auswerteschaltung kann dann eingerichtet sein, um basierend auf den ermittelten vier Phasendifferenzen weiterhin eine Weglänge zwischen der Lichtlenkeinrichtung und dem Oberflächenbereich zu bestimmen. Die Lichtlenkeinrichtung kann mit einer Fokussierungsoptik für die Folge von Lichtpulsen versehen sein, die basierend auf dem bestimmten Abstand zwischen der Lichtlenkeinrichtung und dem Oberflächenbereich so einstellbar ist, dass eine Fokussierung des eingestrahlten Lichts auf dem Oberflächenbereich erfolgt. Auf diese Weise können die lateralen Abmessungen des Oberflächenbereichs reduziert und die laterale Auflösung der Oberflächenvermessung erhöht werden. Idealerweise wird das eingestrahlte Licht beugungsbegrenzt auf der Oberfläche fokussiert.

Die Lichtlenkeinrichtung kann auf verschiedene Weise ausgestaltet sein, um ein Abtasten der Oberfläche dadurch zu ermöglichen, dass mehrere Folgen von Lichtpulsen sequentiell auf mehrere Oberflächenbereiche eingestrahlt werden. Die Lichtlenkeinrichtung kann wenigstens ein verstellbares optisches Element, beispielsweise einen Umlenkspiegel oder ein Umlenkprisma mit veränderbarer Position und/oder Ausrichtung aufweisen. Durch Ansteuern des verstellbaren optischen Elements unter Verwendung einer geeigneten Aktorik kann die Oberfläche automatisch vermessen werden.

Die Lichtlenkeinrichtung kann auch ein Handgerät umfassen. Beispielsweise kann ein optisches Zeigegerät eingesetzt werden, das über einen Lichtwellenleiter die Folge von Lichtpulsen empfängt und in einer Richtung ausgibt, in die eine Achse des Zeigegeräts gehalten wird. Dadurch wird es möglich, dass ein Benutzer die Bestimmung der Position eines ausgewählten Oberflächenbereichs dadurch bewirkt, dass mit dem Handgerät die Folge von Lichtpulsen auf den Oberflächenbereich gelenkt wird. Nach einigen Ausführungsbeispielen erlaubt die Vorrichtung, die Position des Oberflächenbereichs selbst dann zu bestimmen, wenn der Abstand zwischen Handgerät und Oberfläche nicht bekannt ist. Die Oberfläche kann vermessen werden, indem benutzerdefiniert die Positionen von Oberflächenbereichen sequentiell ermittelt werden, die der Benutzer auf einfache Weise dadurch auswählen kann, dass er das Handgerät auf den jeweiligen Oberflächenbereich richtet.

Die Detektoranordnung und die Auswerteschaltung können in einem Gerät verbaut sein, wobei die Detektoren der Detektoranordnung an einer Seitenfläche eines Gehäuses des Geräts angeordnet sein können, um eine kompakte Bauweise und große Einsatzflexibilität der Detektoranordnung und Auswerteschaltung zu verwirklichen.

Die Vorrichtung kann wenigstens einen Referenzsignaldetektor aufweisen. Der Referenzsignaldetektor ist so angeordnet, dass er einen Anteil der von der Lichtquelle erzeugten Folge von Lichtpulsen als Referenzsignal erfasst. Der Referenzsignaldetektor ist mit der Auswerteschaltung gekoppelt, um das Referenzsignal an diese bereitzustellen.

Die Auswerteschaltung kann das Referenzsignal auf verschiedene Weisen zur Bestimmung der Phasendifferenz verwenden. Die Phasendifferenz kann als Phasendifferenz zwischen einer Referenzsignalkomponente des Referenzsignals und der Signalkomponente ermittelt werden, wobei die Referenzsignalkomponente und die Signalkomponente jeweils die Frequenz aufweisen, die dem Vielfachen der Repetitionsrate entspricht. Zusätzlich oder alternativ kann das Referenzsignal verwendet werden, um die Signalkomponente des wenigstens einen Lichtsignals auf eine niedrigere Frequenz herunterzumischen. Das Heruntermischen erfolgt vorteilhaft derart, dass die zu bestimmende Phasendifferenz durch das Heruntermischen im Wesentlichen unverändert bleibt. Das Heruntermischen kann auch in einem mehrstufigen Prozess über einen Zwischenfrequenzbereich erfolgen. In diesem Fall können verschiedene Referenzsignalkomponenten verwendet werden, um die Signalkomponente zuerst in den Zwischenfrequenzbereich und dann auf die niedrigere Frequenz, insbesondere die Repetitionsrate, herunterzumischen. Durch das Heruntermischen unter Beibehaltung der der ursprünglichen Frequenz entsprechenden Phasendifferenz kann die Phasendifferenz zwischen Signalen mit niedrigerer Frequenz ermittelt werden.

Wenn wenigstens zwei verschiedene Referenzsignalkomponenten des Referenzsignals verwendet werden, beispielsweise um die Signalkomponente in mehreren Stufen herunterzumischen, sind vorteilhaft auch mehrere Referenzsignaldetektoren vorgesehen. Da mehrere Referenzsignaldetektoren zum Detektieren des Referenzsignals vorgesehen sind, können die Komponenten in den jeweiligen Signalverarbeitungspfaden der Auswerteschaltung spezifisch im Hinblick auf die in dem Signalverarbeitungspfad jeweils benötigten Referenzsignalkomponenten gewählt werden. Beispielsweise kann eine Eingangsverstärkung der von den zwei Referenzsignaldetektoren gelieferten Signale jeweils mit einem Verstärker vorgenommen werden, der spezifisch in Hinblick darauf ausgewählt wird, dass er in dem Frequenzbereich eine gute Leistungscharakteristik aufweist, in dem die Frequenz der Referenzsignalkomponente in dem jeweiligen Signalverarbeitungspfad liegt.

Das Bestimmen der Phasendifferenz durch die Auswerteschaltung kann iterativ so geschehen, dass für mehrere Signalkomponenten des Lichtsignals mit unterschiedlicher Frequenz jeweils eine zugeordnete Phasendifferenz bestimmt wird. Dabei können mit zunehmender Anzahl von Iterationen Signalkomponenten mit zunehmend größeren Frequenzen gewählt werden, d.h. Signalkomponenten, die größerzahlige Vielfache der Repetitionsrate als Frequenz aufweisen. Auf diese Weise kann die Genauigkeit, mit der die Position des Objekts bestimmt wird, iterativ verbessert werden. Dies ist insbesondere dann vorteilhaft, wenn die Bestimmung der Position des Objekts voraussetzt, dass die Position des Objekts bereits mit einer bestimmten Genauigkeit vorbekannt ist.

Verschiedene Maßnahmen können vorgesehen werden, um den Signalpegel der erfassten Lichtsignale zu erhöhen und eine zuverlässige Vermessung der Oberfläche auf der Basis von von der Oberfläche gestreutem Licht zu ermöglichen. Beispielsweise kann jeder Detektor der Detektoranordnung mit einem optischen Element, insbesondere einer Sammellinse oder einem Hohlspiegel, versehen sein, um den Signalpegel zu erhöhen. Eine Sperreinrichtung kann während eines Zeitintervalls, in dem kein gestreuter Lichtpuls an einem Detektor auftreffen kann, ein Auftreffen von Licht auf den Detektor und/oder eine Signalverarbeitung in einem zugehörigen Signalverarbeitungspfad der Auswerteschaltung unterdrücken. Dadurch kann Rauschen unterdrückt werden, das während der Zeitintervalle auftritt, in denen keine Nutzsignale die Detektoren erreichen.

Die Lichtquelle kann einen Kurzpulslaser umfassen, der beispielsweise elektrisch oder optisch gepumpt sein kann. Es kann jedoch auch jede andere geeignete Signalquelle verwendet werden, die in der Lage ist, mit hoher Genauigkeit ein optisches Signal auszugeben, das eine Grundfrequenz und stark ausgeprägte Oberwellen, d.h. hohe Harmonische der Grundfrequenz aufweist.

Die Vorrichtung kann in allen Anwendungsgebieten eingesetzt werden, in denen eine Oberfläche vermessen werden soll. Beispielsweise kann die Vorrichtung zur Digitalisierung von Räumen oder bei der quantitativen Qualitätskontrolle eingesetzt werden.

Vorstellbar ist ebenso eine Detektions- und Auswerteeinrichtung (nicht als solches durch die Ansprüche abgedecht) zum Bestimmen einer Position eines Objekts, auf das von einer Einstrahlposition aus ein Lichtstrahl mit modulierter Intensität eingestrahlt wird. Eine Detektoranordnung mit einer Mehrzahl von Detektoren ist vorgesehen, um eine Mehrzahl von von dem Objekt gestreuten und/oder reflektierten Lichtsignalen zu erfassen. Eine Auswerteschaltung ist mit der Detektoranordnung gekoppelt, um für jedes Lichtsignal eine zugeordnete Phasendifferenz zwischen einem Referenzsignal und einer Signalkomponente des Lichtsignals zu bestimmen. Bei der Einrichtung wird eine Anzahl der Detektoren und eine Anordnung der Detektoren der Detektoranordnung derart gewählt, dass die Position des Objekts basierend auf den Phasendifferenzen selbst bei unbekannter Einstrahlposition des Lichtstrahls ermittelbar ist. Als Einstrahlposition wird dabei eine Position im Strahlengang des Lichtstrahls bezeichnet, von der aus der Lichtstrahl auf das Objekt eingestrahlt wird.

Da bei einer derart ausgestalteten Einrichtung eine Anzahl von Detektoren in einer räumlichen Anordnung vorgesehen ist, die es erlaubt, ausreichend viele von dem Objekt reflektierte und/oder gestreute Lichtsignale zu empfangen, um bei der Positionsbestimmung einen unbekannten Abstand zwischen Objekt und Einstrahlposition des Lichtstrahls zu eliminieren, erlaubt die Einrichtung die Positionsbestimmung selbst dann, wenn die Einstrahlposition stark variiert. So bleibt eine Positionsbestimmung auch möglich, wenn mit einem Handgerät, einem Roboterarm oder sonstiger Aktorik, der bzw. die nicht mit hoher Genauigkeit steuerbar ist, die Einstrahlposition verändert wird, um eine Oberfläche des Objekts abzutasten bzw. zu scannen.

Die Detektoranordnung kann wenigstens vier Detektoren umfassen, die derart angeordnet sind, dass maximal zwei Detektoren auf einer beliebig gewählten Geraden liegen. Die Detektoren können an einer Seitenfläche eines Gehäuses der Detektions- und Auswerteeinrichtung vorgesehen sein. Sofern die Einrichtung so angeordnet wird, dass von dem Objekt reflektiertes oder gestreutes Licht an der Seitenfläche nicht parallel zu der Seitenfläche des Gehäuses propagiert, erlaubt eine derartige Detektoranordnung die Bestimmung von drei räumlichen Koordinaten des Objekts, selbst wenn ein Abstand zwischen Objekt und Einstrahlposition unbekannt ist.

Die Intensität des Lichtstrahls kann so moduliert sein, dass der Lichtstrahl im Wesentlichen eine Folge von Lichtpulsen mit einer vorgegebenen Repetitionsrate aufweist. Die Auswerteschaltung kann eingerichtet sein, um für jedes Lichtsignal die zugeordnete Phasendifferenz zwischen dem Referenzsignal und der Signalkomponente des Lichtsignals zu bestimmen, wobei die Signalkomponente eine Frequenz aufweist, die ein Vielfaches der Repetitionsrate ist. Als Referenzsignal kann die Intensität der eingestrahlten Folge von Lichtpulsen als Funktion der Zeit dienen. Da die Phasendifferenz basierend auf einer Signalkomponente ermittelt wird, deren Frequenz einem Vielfachen der Grundfrequenz der Folge von Lichtpulsen entspricht, kann die Genauigkeit der Abstandsbestimmung bei vorgegebener Phasenauflösung verbessert werden, wie oben beschrieben wurde.

Die Detektions- und Auswerteeinrichtung kann bei der Vorrichtung zum Vermessen einer Oberfläche nach einem Ausführungsbeispiel verwendet werden, kann aber auch in anderen Gebieten eingesetzt werden, in denen eine Position eines Objekts, d.h. mehrere Koordinaten des Objekts, bestimmt werden soll.

Nach einem weiteren Aspekt der Erfindung wird ein Verfahren zum Vermessen einer Oberfläche angegeben, bei dem sequentiell Positionen von mehreren Oberflächenbereichen der Oberfläche bestimmt werden, wobei das Bestimmen einer Position eines Oberflächenbereichs die folgenden Schritte umfasst: Einstrahlen einer Folge von Lichtpulsen mit einer Repetitionsrate auf den Oberflächenbereich, Erfassen wenigstens eines Lichtsignals, das die an dem Oberflächenbereich gestreute und/oder reflektierte Folge von Lichtpulsen umfasst, und Bestimmen der Position des Oberflächenbereichs basierend auf einer Signalkomponente des wenigstens einen erfassten Lichtsignals, wobei die Signalkomponente eine Frequenz aufweist, die einem Vielfachen der Repetitionsrate entspricht, dadurch gekennzeichnet, dass zum Bestimmen der Position des Oberflächenbereichs eine Mehrzahl von Lichtsignalen, die jeweils die an dem Oberflächenbereich in unterschiedliche Richtungen gestreute Folge von Lichtpulsen umfassen, mit einer Mehrzahl von Detektoren erfasst und für jedes Lichtsignal der Mehrzahl von Lichtsignalen eine zugeordnete Phasendifferenz zwischen einem basierend auf der eingestrahlten Folge von Lichtpulsen bestimmten Referenzsignal und einer Signalkomponente des Lichtsignals bestimmt wird, wobei die Signalkomponente jeweils eine Frequenz aufweist, die einem Vielfachen der Repetitionsrate entspricht.

Die Position des Oberflächenbereichs wird dabei basierend auf einer Phasendifferenz zwischen einem aus der eingestrahlten Folge von Lichtpulsen abgeleiteten Referenzsignal und der Signalkomponente des wenigstens einen erfassten Lichtsignals bestimmt.

Wie im Zusammenhang mit der Vorrichtung zum Vermessen einer Oberfläche erläutert wurde, kann mit diesem Verfahren die Oberfläche berührungslos vermessen werden. Da eine Signalkomponente mit einer Frequenz, die einem Vielfachen der Repetitionsrate entspricht, zum Bestimmen der Phasendifferenz verwendet wird, wird die Genauigkeit erhöht, mit der die Position der einzelnen Oberflächenbereiche bestimmt werden kann, um so die Genauigkeit der Oberflächenvermessung zu erhöhen.

Es wird dabei eine Mehrzahl von Lichtsignalen erfasst, die der Folge von Lichtpulsen entsprechen, die an dem Oberflächenbereich in unterschiedliche Richtungen gestreut wird. Für jedes der Lichtsignale wird eine Phasendifferenz basierend auf einer Signalkomponente bestimmt, deren Frequenz einem Vielfachen der Repetitionsrate entspricht. Die Anzahl von erfassten Lichtsignalen wird basierend auf der Anzahl von unbekannten Koordinaten des Oberflächenbereichs sowie auf gegebenenfalls vorhandenen weiteren unbekannten Parametern, wie einem Abstand des Oberflächenbereichs von einer Einstrahlposition, so gewählt, dass die Koordinaten des Oberflächenbereichs bestimmt werden können. Beispielsweise können wenigstens drei von dem Oberflächenbereich in wenigstens drei unterschiedliche Richtungen gestreute Lichtsignale erfasst werden. Dies erlaubt es, die Koordinaten des Oberflächenbereichs zu bestimmen, selbst wenn die Einstrahlposition unbekannt ist, von der aus die Folge von Lichtpulsen auf den Oberflächenbereich gestrahlt wird. Es können auch wenigstens vier von dem Oberflächenbereich in wenigstens vier unterschiedliche Richtungen gestreute Lichtsignale erfasst werden. Dies erlaubt es, aus den ermittelten Phasendifferenzen neben den Koordinaten des Oberflächenbereichs weiterhin einen Abstand zwischen der Einstrahlposition und dem Oberflächenbereich zu bestimmen. Der ermittelte Abstandswert kann beispielsweise zur Verbesserung der lateralen Auflösung eingesetzt werden, indem die eingestrahlte Folge von Lichtpulsen auf den Oberflächenbereich fokussiert wird.

Es können grundsätzlich auch mehr Phasendifferenzen bestimmt werden als zur Berechnung der Position des Oberflächenbereichs, beispielsweise durch Trilateration, eigentlich erforderlich sind. Dies erlaubt es, ein überbestimmtes Gleichungssystem für die Position des Oberflächenbereichs aufzustellen, um die Genauigkeit der Positionsbestimmung zu erhöhen. Dabei können Methoden zum Einsatz kommen, wie sie beispielsweise aus der Positionsbestimmung bei dem Globalen Positionsbestimmungssystem (GPS) bekannt sind, um aus einer Mehrzahl von Abstandswerten die Position des Oberflächenbereichs zu bestimmen.

Um die Oberfläche zu vermessen, wird diese abgetastet, um mehrere Folgen von Lichtpulsen auf die mehreren Oberflächenbereiche zu strahlen. Dieses Abtasten oder Scannen der Oberfläche kann weitgehend automatisiert erfolgen, beispielsweise indem ein verstellbares optisches Element angesteuert wird. Die Bereiche, auf die die Folgen von Lichtpulsen für verschiedene Stellungen des verstellbaren optischen Elements einfallen, definieren die mehreren Oberflächenbereiche, deren Positionen bestimmt werden. Ein Oberflächenbereich, dessen Position bestimmt wird, kann auch weitgehend benutzerdefiniert ausgewählt werden, beispielsweise indem mittels eines Handgeräts die Folge von Lichtpulsen auf den Oberflächenbereich eingestrahlt wird.

Um die Phasendifferenz der Signalkomponente relativ zu einem Referenzsignal zu bestimmen, das beispielsweise dadurch gewonnen werden kann, dass ein Anteil der Folge von Lichtpulsen auf einen Referenzsignaldetektor gelenkt wird, kann die Signalkomponente auf eine niedrigere Frequenz heruntergemischt werden. Dies erlaubt es, die Bestimmung der Phasendifferenz auf einem niederfrequenten Signal durchführen zu können. Zum Heruntermischen kann die Signalkomponente mit einer Referenzsignalkomponente des Referenzsignals gemischt werden, deren Frequenz ebenfalls ein Vielfaches der Grundfrequenz der Folge von Lichtpulsen, d.h. ein Vielfaches der Repetitionsrate, ist. Die Signalkomponente kann einem mehrstufigen Mischverfahren unterzogen werden, um sie auf die niedrige Frequenz herunterzumischen. Um die Position des Oberflächenbereichs zu bestimmen, kann für ein erfasstes Lichtsignal iterativ für mehrere Signalkomponenten eine Phasendifferenz bestimmt werden, wobei Frequenzen der Signalkomponenten mit zunehmender Anzahl von Iterationen größer gewählt werden. Auf diese Weise kann die Genauigkeit der Positionsbestimmung von Iteration zu Iteration erhöht werden. Wenigstens eine der mehreren Signalkomponenten weist eine Frequenz auf, die einem Vielfachen der Repetitionsrate entspricht.

Zur Verbesserung eines Signal/Rausch-Verhältnisses kann das Erfassen von Lichtsignalen und/oder eine weitere Signalverarbeitung der erfassten Lichtsignale in einem Zeitintervall unterdrückt werden, in dem kein Lichtpuls erfassbar ist. Das Zeitintervall wird basierend auf der Repetitionsrate und minimalen und maximalen erwarteten Signallaufzeiten bestimmt. Alternativ oder zusätzlich kann zur Verbesserung des Signalpegels ein Hohlspiegel oder eine Linse an einer Detektoranordnung zum Erfassen des wenigstens einen Lichtsignals vorgesehen werden.

Das Verfahren kann mit einer Vorrichtung nach einem Ausführungsbeispiel der Erfindung durchgeführt werden.

Die Vorrichtungen und Verfahren nach verschiedenen Ausführungsbeispielen der Erfindung können allgemein zum Vermessen von Oberflächen eingesetzt werden. Ein beispielhaftes Anwendungsfeld sind Messanwendungen in der quantitativen Qualitätskontrolle, insbesondere in der industriellen Produktion. Jedoch sind die Ausführungsbeispiele der Erfindung nicht auf diese Anwendungen beschränkt.

Die Erfindung wird nachfolgend anhand von Ausführungsbeispielen unter Bezugnahme auf die beigefügte Zeichnung näher erläutert.

Fig. 1 ist eine schematische Darstellung einer Vorrichtung nach einem Ausführungsbeispiel.

Fig. 2A zeigt beispielhaft eine Folge von Lichtpulsen als Funktion der Zeit, und Fig. 2B zeigt schematisch ein Fourier-Spektrum der Folge von Lichtpulsen von Fig. 2A.

Fig. 3 ist ein schematisches Blockschaltbild einer Detektoranordnung und Auswerteschaltung, die bei der Vorrichtung von Fig. 1 verwendet werden kann.

Fig. 4A und 4B zeigen beispielhafte Signale, die in der Auswerteschaltung von Fig. 3 auftreten.

Fig. 5 ist ein schematisches Blockschaltbild einer weiteren Detektoranordnung und Auswerteschaltung, die bei der Vorrichtung von Fig. 1 verwendet werden kann.

Fig. 6 veranschaulicht eine Bestimmung einer Position bei der Vorrichtung von Fig. 1.

Fig. 7 ist eine schematische Darstellung einer Vorrichtung nach einem weiteren Ausführungsbeispiel.

Fig. 8 veranschaulicht eine Bestimmung einer Position bei der Vorrichtung von Fig. 7.

Fig. 9 ist eine schematische Darstellung einer Vorrichtung nach einem weiteren Ausführungsbeispiel.

Fig. 10 ist eine schematische Darstellung einer Vorrichtung nach einem weiteren Ausführungsbeispiel.

Fig. 11 ist ein schematisches Blockschaltbild einer weiteren Detektoranordnung und Auswerteschaltung.

Fig. 12 veranschaulicht Schaltzustände bei der Auswerteschaltung von Fig. 11.

Fig. 13 ist eine Flussdiagrammdarstellung eines Verfahrens nach einem Ausführungsbeispiel.

Fig. 14 ist eine Flussdiagrammdarstellung eines Verfahrens nach einem weiteren Ausführungsbeispiel.

Nachfolgend werden Ausführungsbeispiele der Erfindung näher erläutert. Die Merkmale der verschiedenen Ausführungsbeispiele können miteinander kombiniert werden, sofern dies in der nachfolgenden Beschreibung nicht ausdrücklich ausgeschlossen wird. Auch wenn einzelne Ausführungsbeispiele im Hinblick auf spezifische Anwendungen, beispielsweise im Kontext einer industriellen Anlage, beschrieben werden, ist die vorliegende Erfindung nicht auf diese Anwendungen beschränkt.

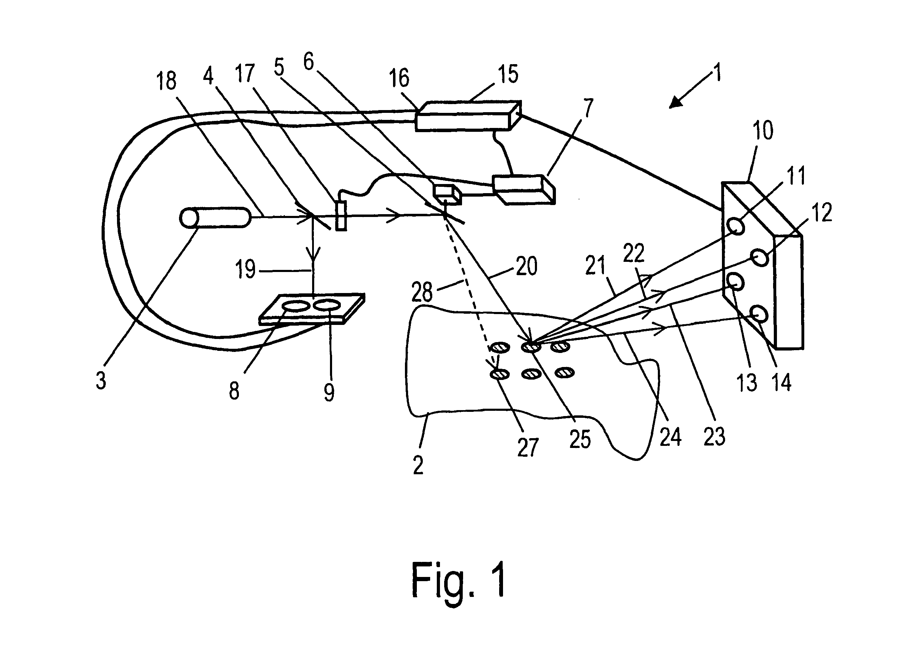

Fig. 1 ist eine schematische Darstellung einer Vorrichtung 1 zum Vermessen einer Oberfläche 2 nach einem Ausführungsbeispiel.

Die Vorrichtung 1 umfasst eine Lichtquelle 3, die mit einer Repetitionsrate eine Folge kurzer Lichtpulse erzeugt, eine Lichtlenkeinrichtung, die einen verstellbaren Umlenkspiegel 5 und eine zugehörige Verstelleinrichtung oder Aktorik 6 aufweist, eine Detektoranordnung 10 mit mehreren Fotodetektoren 11-14 und eine Auswerteschaltung 15. Von der Lichtquelle 3 wird die Folge von Lichtpulsen in einem Lichtstrahl auf den Umlenkspiegel 5 gestrahlt. Abhängig von der Stellung des Umlenkspiegels 5 wird die Folge von Lichtpulsen als Lichtstrahl 20 auf einen Oberflächenbereich 25 der Oberfläche 2 gelenkt. Eine charakteristische Ausdehnung des Oberflächenbereichs 25 ist dabei bestimmt durch den Durchmesser des Lichtstrahls 20, d.h. der Folge von Lichtpulsen, beim Auftreffen auf die Oberfläche 2. Wenn der Lichtstrahl 20 auf die Oberfläche 2 fokussiert wird, kann der Durchmesser des Oberflächenbereichs 25 im Idealfall im Wesentlichen beugungsbegrenzt sein.

Die Folge von Lichtpulsen wird an dem Oberflächenbereich 25 gestreut. Die Fotodetektoren 11-14 der Detektoranordnung 10 empfangen Lichtsignale 21-24, die jeweils einen Anteil der von dem Oberflächenbereich 25 gestreuten Folge von Lichtpulsen beinhalten. Die Fotodetektoren 11-14 detektieren eine empfangene Lichtenergie bzw. Lichtintensität als Funktion der Zeit. Die Auswerteschaltung 15 ermittelt für die von den Fotodetektoren 11-14 erfassten Lichtsignale eine Phasenlage relativ zu der eingestrahlten Folge von Lichtpulsen. Die Phasenlage steht in einer Beziehung zur Laufzeit der Lichtpulse von dem Oberflächenbereich 25 zu den Fotodetektoren 11-14 und somit zum Abstand des Oberflächenbereichs 25 zu den Detektoren. Auf diese Weise kann die Position des Oberflächenbereichs 25 ermittelt werden. Wie unten ausführlicher erörtert wird, beruht die Ermittlung der Phasenlage durch die Auswerteschaltung 15 auf Signalkomponenten der an den Fotodetektoren 11-14 erfassten Lichtsignale, die eine Frequenz aufweisen, die ein Vielfaches der Repetitionsrate ist.

Die Vorrichtung 1 umfasst weiterhin zwei Referenzsignaldetektoren 8, 9, auf die von einem Strahlteiler 4 die Folge von Lichtpulsen in einem Teilstrahl 19 als Referenzsignal gelenkt wird. Aus Gründen der Einfachheit wird hier davon gesprochen, dass sowohl in dem von dem Strahlteiler 4 zu dem Umlenkspiegel 5 transmittierten Lichtstrahl als auch in dem von dem Strahlteiler 4 zu den Referenzsignaldetektoren 8, 9 gelenkten Teilstrahl 19 die Folge von Lichtpulsen eingestrahlt wird, wobei es sich versteht, dass jeweils nur ein Anteil der Lichtintensität jedes Lichtpulses in dem Teilstrahl 19 zu den Referenzsignaldetektoren 8, 9 bzw. in dem Teilstrahl 20 auf die Oberfläche 2 gelenkt wird. Das Referenzsignal 19 wird von beiden Referenzsignaldetektoren 8, 9 erfasst und an einem Referenzsignaleingang 16 an die Auswerteschaltung 15 bereitgestellt. Gegebenenfalls kann ein Strahlaufweiter in dem Strahlengang des Teilstrahls 19 angeordnet sein, um sicherzustellen, dass der Teilstrahl 19 von beiden Referenzsignaldetektoren 8, 9 erfasst wird. Wie noch ausführlicher erläutert wird, wird das von den Referenzsignaldetektoren 8, 9 jeweils bereitgestellte Referenzsignal von der Auswerteschaltung 15 verwendet, um die Phasenlagen der von dem Oberflächenbereich 25 gestreuten Folge von Lichtpulsen zu ermitteln.

Die Vorrichtung 1 umfasst weiterhin eine Recheneinheit 7, die mit der Auswerteschaltung 15 gekoppelt ist, um basierend auf den ermittelten Phasenlagen die Position des Oberflächenbereichs 25 zu bestimmen.

Unter der Bestimmung der Position des Oberflächenbereichs 25 wird hier die Ermittlung von drei Koordinaten eines Punktes des Oberflächenbereichs 25 verstanden. Da der Oberflächenbereich 25 im Idealfall eine kleine Abmessung hat, die durch den Durchmesser des eingestrahlten Lichtstrahls 20 bestimmt ist, wird vereinfachend auf die Position des Oberflächenbereichs Bezug genommen werden, auch wenn dieser selbst eine gewisse, geringe Ausdehnung aufweist.

Um die Abmessung des Oberflächenbereichs 25 zu reduzieren und die laterale Auflösung bei der Vermessung der Oberfläche 2 zu erhöhen, ist eine einstellbare Fokussierungsoptik 17 in dem Strahlengang zwischen dem Strahlteiler 4 und dem Umlenkspiegel 5 vorgesehen. Die Fokussierungsoptik 17 wird von der Recheneinheit 7 derart angesteuert, dass der Lichtstrahl 20 auf der Oberfläche 2 fokussiert, im Idealfall beugungsbegrenzt fokussiert wird.

Da bei der Vorrichtung 1 die Position des Oberflächenbereichs 25 basierend auf den von den Fotodetektoren 11-14 erfassten Lichtsignalen 21-24 und dem von den Referenzsignaldetektoren 8 und 9 erfassten Referenzsignal 19 ermittelt wird, muss zur Positionsbestimmung des Oberflächenbereichs 25 bei der Vorrichtung 1 die Winkelposition des Umlenkspiegels 5 nicht genau bekannt sein. Weiterhin wird durch Verwendung einer Detektoranordnung 10, bei der eine Anzahl von Fotodetektoren 11-14 verwendet wird, die größer als die Anzahl der zu bestimmenden Koordinaten des Oberflächenbereichs 25 ist, erreicht, dass die Positionsbestimmung robust erfolgen kann, selbst wenn die genaue Position des Umlenkspiegels 5 nicht bekannt ist.

Die Recheneinheit 7 ist mit der Aktorik 6 des Umlenkspiegels 5 gekoppelt, um durch Steuern der Aktorik 6 die Position des Umlenkspiegels 5 einzustellen. Durch Verstellen des Umlenkspiegels 5 kann die Folge von Lichtpulsen als Lichtstrahl 28 auf einen anderen Oberflächenbereich 27 gelenkt werden, um dessen Position zu bestimmen. Um die Oberfläche 2 abzutasten, kann der Umlenkspiegel 5 kardanisch aufgehängt sein. Aufgrund der Robustheit der Positionsbestimmung bei der Vorrichtung 1 können jedoch auch andere, einfachere Ablenksysteme verwendet werden, beispielsweise eine Paar von um zwei zueinander orthogonale Achsen verkippbare oder drehbare Spiegel. Anstelle von Umlenkspiegeln können auch andere geeignete optische Elemente verwendet werden, um die Oberfläche abzutasten, beispielsweise ein Umlenkprisma oder dergleichen.

Da die Positionen der verschiedenen Oberflächenbereiche sequentiell bestimmt werden, wobei die Positionsbestimmung für jeden der Oberflächenbereiche auf dieselbe Weise erfolgt, wird nachfolgend nur die Positionsbestimmung für einen Oberflächenbereich näher beschrieben. Zum Vermessen der Oberfläche werden die Positionen mehrerer Oberflächenbereiche jeweils auf die beschriebene Weise nacheinander ermittelt.

Die Lichtquelle 3 der Vorrichtung 1 erzeugt ein optisches Signal, dessen Intensität mit einer periodischen Funktion moduliert ist, wobei die Modulation eine Grundfrequenz f0 sowie ausgeprägte Anteile von Oberwellen der Grundfrequenz f0, d.h. ausgeprägte Frequenzkomponenten mit Frequenzen aufweist, die Vielfache von f0 sind. Ein solches Signal wird beispielsweise durch einen Kurzpulslaser erzeugt, der eine Folge von Lichtpulsen in einem wohldefinierten zeitlichen Abstand T0=1/f0, d.h. mit einer Repetitionsrate f0, erzeugt, wobei die Dauer jedes Pulses kurz ist im Vergleich zum zeitlichen Abstand T0 zwischen aufeinanderfolgenden Pulsen.

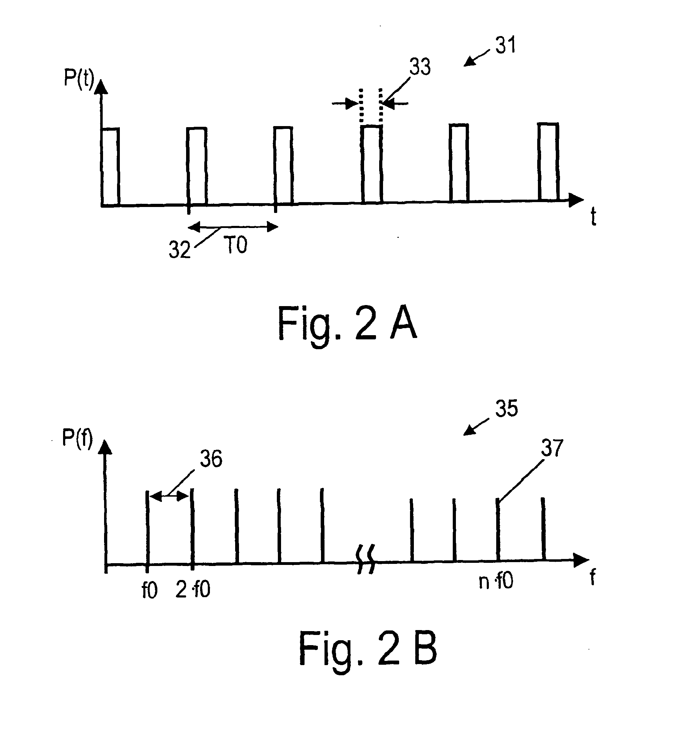

Fig. 2A zeigt beispielhaft eine derartige Folge kurzer Lichtpulse 31, wobei die Ausgangsleistung P der Lichtquelle 3 als Funktion der Zeit t dargestellt ist. Der Zeitabstand T0 zwischen aufeinanderfolgenden Pulsen ist mit dem Bezugszeichen 32 angedeutet, während die Dauer jedes Lichtpulses mit dem Bezugszeichen 33 angedeutet ist. Die Dauer jedes Lichtpulses kann im Vergleich zu dem Zeitabstand T0 zwischen aufeinanderfolgenden Lichtpulsen sehr klein sein, beispielsweise von der Größenordnung $1 \cdot 10^{-5}$. Bei der Vorrichtung 3 können die Repetitionsrate f0 und die Zeitdauer jedes Pulses geeignet in Abhängigkeit von einer gewünschten Messgenauigkeit bei der Positionsbestimmung, von einer anfänglichen Unsicherheit über die Position des Oberflächenbereichs, von der Frequenz der Signalkomponente des an den Fotodetektoren 11-14 detektierten Lichtsignals, für die die Phasendifferenz bestimmt wird, oder in Abhängigkeit von weiteren Faktoren gewählt werden. Soll zur Bestimmung der Phasendifferenz die n-te Oberwelle von f0 verwendet werden, werden die Dauer jedes Lichtpulses und der Zeitabstand T0 zwischen aufeinanderfolgenden Lichtpulsen so gewählt, dass die von der Lichtquelle 3 ausgegebene Folge von Lichtpulsen noch ein ausreichendes spektrales Gewicht bei der Frequenz $n \cdot f0$ aufweist. Auch wenn in Fig. 2A beispielhaft eine Folge von Rechteckspulsen dargestellt ist, können ebenso andere geeignete Pulsformen gewählt werden, beispielsweise das Quadrat eines hyperbolischen Secans oder eine Gaussfunktion.

Fig. 2B zeigt beispielhaft ein Frequenzspektrum 35 einer Folge von Lichtpulsen, die mit einer Repetitionsrate f0 erzeugt werden, wobei die Dauer jedes Lichtpulses kurz im Vergleich zu T0=1/f0 ist. Das Frequenzspektrum 35 weist eine Anzahl von Peaks mit einem konstanten Frequenzabstand f0 auf, der bei dem Bezugszeichen 36 schematisch angedeutet ist. Das spektrale Gewicht der einzelnen Peaks nimmt zu höheren Frequenzen hin ab, wobei die Stärke des Abfalls durch das Verhältnis von Zeitabstand zwischen aufeinanderfolgenden Lichtpulsen und Lichtpulsdauer bestimmt ist. Diese Größen sind bei der Lichtquelle 3 der Vorrichtung 1 so gewählt, dass das spektrale Gewicht der Frequenzkomponente 37 mit Frequenz $n \cdot f0$, die zur Bestimmung von Phasenlagen verwendet wird, in der Folge von Lichtpulsen ausreichend hoch für die Durchführung von Phasenmessungen ist.

Eine Folge von Lichtpulsen, wie sie schematisch in Fig. 2 dargestellt ist, kann von verschiedenen Lasern erzeugt werden, die für die Erzeugung kurzer Lichtpulse eingerichtet sind. Insbesondere können optische Frequenzsynthesizer verwendet werden. Beispielsweise kann ein elektrisch gepumpter Diodenlaser, z.B. ein gütegeschalteter Laser, ein verstärkungsgeschalteter (gain switched) Laser, ein aktiv oder passiv modengekoppelter Laser oder ein Laser mit hybrider Modenkopplung, oder ein modengekoppelter oberflächenemittierender Laser mit vertikalem Resonator (Vertical-Cavity Surface Emitting Laser, VCSEL) als Lichtquelle 3 verwendet werden. Es kann auch ein optisch gepumpter Laser, beispielsweise ein passiv modengekoppelter oberflächenemittierender Laser mit externem vertikalen Resonator (Vertical External Cavity Surface Emitting Lasers, VECSEL) oder ein auf photonische-Kristallfasern basierender Laser (photonic-crystal-fiber laser) als Lichtquelle 3 verwendet werden. Beispielhafte Pulsdauern der Lichtquelle 3 liegen in einem Bereich von 100 fs und 100 ps. Beispielhafte Repetitionsraten liegen in einem Bereich von 50 MHz bis 50 GHz. Beispielhafte mittlere Leistungen liegen in einem Bereich von 1 mW bis 10 W. Beispielhafte Werte für den Pulsjitter liegen zwischen 10 fs und 1 ps Effektivwert (quadratischer Mittelwert).

Wie in Fig. 1 dargestellt, wird ein Teilstrahl der von der Lichtquelle 3 ausgegebenen Folge von Lichtpulsen über den Strahlteiler 4 als Referenzsignal 19 zu den Referenzsignaldetektoren 8, 9 gelenkt. Falls erforderlich, kann im Strahlengang von dem Strahlteiler 4 zu den Referenzsignaldetektoren 8, 9 ein optisches Element zur Strahlaufteilung, insbesondere ein Strahlteiler vorgesehen sein um sicherzustellen, dass der Teilstrahl 19 sowohl auf den Referenzsignaldetektor 8 als auch auf den Referenzsignaldetektor 9 trifft. Ein weiterer Teilstrahl 20 wird über den Umlenkspiegel 5 auf den Oberflächenbereich 25 der Oberfläche 2 gelenkt. Hier wird angenommen, dass der Oberflächenbereich, auf den die Folge von Lichtpulsen eingestrahlt wird, lichtstreuende Eigenschaften aufweist. Die Folge von Lichtpulsen wird von dem Oberflächenbereich 25 in eine Vielzahl von Raumrichtungen gestreut. Das Streulicht beinhaltet auch die Folge von Lichtpulsen, die als Lichtsignale 21-24 in Richtung der Fotodetektoren 11-14 gestreut wird. Die Fotodetektoren 11-14 der Detektoranordnung 10 sind derart angeordnet, dass keiner der Fotodetektoren auf einer Geraden liegt, die durch einen Oberflächenbereich 25, 27, dessen Position zu bestimmen ist, und einen weiteren der Fotodetektoren geht. Bei der dargestellten Anordnung, bei der die vier Fotodetektoren 11-14 im Wesentlichen in einer Ebene derart angeordnet sind, dass nie mehr als zwei der Fotodetektoren 11-14 auf einer beliebig gewählten Geraden angeordnet sind, kann dies einfach erreicht werden, beispielsweise indem die Detektoranordnung 10 beabstandet von der Oberfläche 2 und in einem von 0° verschiedenen Winkel zu allen Verbindungsvektoren zwischen Oberflächenpunkten und Detektoranordnung 10 angeordnet wird. Aus den Phasenlagen der an den verschiedenen Fotodetektoren 11-14 erfassten Signalen kann in diesem Fall die Position des Oberflächenbereichs 25 bestimmt werden, da eine ausreichend hohe Anzahl von voneinander unabhängigen Phasenlagen ermittelbar ist.

Die Lichtsignale 21-24 werden von den Fotodetektoren 11-14 erfasst. Aufgrund der mit wohldefinierter Repetitionsrate erzeugten Lichtpulse kann der Signalanteil, der von Streuung der Folge von Lichtpulsen an dem Oberflächenbereich 25 herrührt, bei der Signalverarbeitung durch die Auswerteschaltung 15 durch geeignete Filterung bestimmt werden, so dass im Folgenden Signalanteile, die nicht durch das von dem Oberflächenbereich 25 in Richtung der Fotodetektoren 11-14 gestreute Licht verursacht werden, nicht weiter erörtert werden.

Sowohl die Fotodetektoren 11-14 als auch die ebenfalls als Fotodetektoren ausgestalteten Referenzsignaldetektoren 8, 9 erfassen eine auf sie einfallende Lichtenergie als Funktion der Zeit. Die unterschiedliche optische Weglänge eines Lichtpulses, um einerseits zu einem der Referenzsignaldetektoren 8, 9 und andererseits nach einer Streuung an dem Oberflächenbereich 25 zu einem der Fotodetektoren 11-14 zu gelangen, führt jeweils zu einer Zeitverschiebung $\tau_1$, $\tau_2$, $\tau_3$ bzw. $\tau_4$ zwischen der Ankunft ein- und desselben Lichtpulses an einem der Detektoren 11-14 und an den Referenzsignaldetektoren 8, 9, die gleich dem Unterschied in optischer Weglänge der Strahlengänge geteilt durch die Lichtgeschwindigkeit c ist. Da typischerweise nur ein geringer Anteil des auf die Oberfläche 2 eingestrahlten Lichts 20 von dem Oberflächenbereich 25 in Richtung eines der Fotodetektoren 11-14 gestreut wird, ist das Signal an den Fotodetektoren 11-14 gegenüber dem Referenzsignal an den Referenzsignaldetektoren 8, 9 abgeschwächt.

Die Weglängendifferenz ist für jeden der Fotodetektoren 11-14 gegeben durch die Differenz zwischen der optischen Weglänge von dem Strahlteiler 4 über den Umlenkspiegel 5 zu dem Oberflächenbereich 25 und weiter zu dem entsprechenden Fotodetektor 11-14 und der optischen Weglänge von dem Strahlteiler 4 zu den Referenzsignaldetektoren 8, 9. Dabei hängt der erstgenannte Weg von dem Strahlteiler 4 über den Umlenkspiegel 5 zu dem Oberflächenbereich 25 und weiter zu dem entsprechenden Fotodetektor 11-14 von der zu bestimmenden Position des Oberflächenbereichs 25 ab, während der Abstand von dem Strahlteiler 4 zu den Referenzsignaldetektoren 8, 9 durch die Vorrichtungsgeometrie bestimmt ist und als bekannt vorausgesetzt wird. Durch Messung der Zeitverschiebungen $\tau_1$, $\tau_2$, $\tau_3$ bzw. $\tau_4$ zwischen den an den Fotodetektoren 11-14 erfassten Lichtsignalen 21-24 und dem Referenzsignal 19, das durch die Referenzsignaldetektoren 8, 9 erfasst wird, kann die von dem Lichtpuls zurückgelegte optische Weglänge zwischen dem Strahlteiler 4 und jedem der Fotodetektoren 11-14 bestimmt werden.

Die Fotodetektoren 11-14 sowie die Referenzsignaldetektoren 8, 9 sind mit der Auswerteschaltung 15 gekoppelt, die eine Phasendifferenz zwischen den Lichtsignalen 21-24 und dem Referenzsignal 19 ermittelt. Wie nachfolgend näher erläutert wird, ermittelt die Auswerteschaltung 15 der Vorrichtung 1 die Phasendifferenz zwischen dem Lichtsignal 21-24 und dem Referenzsignal 19 für eine Signalkomponente, deren Frequenz im Wesentlichen ein Vielfaches der Repetitionsrate ist.

Die an den Fotodetektoren 11-14 empfangene Folge von Lichtpulsen weist, wie unter Bezugnahme auf Fig. 2 für die von der Lichtquelle erzeugte Folge von Lichtpulsen erläutert, eine Vielzahl von Oberwellen auf, deren Frequenzen Vielfache der Repetitionsrate f0 sind:

$$f_i = i \cdot f0, \qquad\qquad\qquad\qquad (1)$$

wobei i eine natürlich Zahl und f0 die Repetitionsrate der Lichtquelle 3 ist. Eine charakteristische Größe für Frequenzen, die noch ein signifikantes spektrales Gewicht in einer Fourier-Darstellung der von den Fotodetektoren 11-14 empfangenen Lichtenergie als Funktion der Zeit aufweisen, ist durch den Quotienten aus der Zeitdauer T0 zwischen aufeinanderfolgenden Lichtpulsen und der charakteristischen Zeitdauer eines Lichtpulses gegeben.

Nachfolgend wird die Signalverarbeitung beispielhaft nur für das von dem Fotodetektor 11 erfasste Lichtsignal 21 näher erläutert. Die Erläuterungen gelten entsprechend auch für jedes andere Lichtsignal 22-24, das von dem Oberflächenbereich 25 zu der Detektoranordnung 10 propagiert.

Eine zeitliche Verschiebung $\tau$ zwischen dem Lichtsignal 21 und dem an den Referenzsignaldetektoren 8, 9 empfangenen Referenzsignal 19 führt dazu, dass eine Signalkomponente des an dem Fotodetektor 11 empfangenen Signals, die eine Frequenz $f_i$ aufweist, relativ zu einer Referenzsignalkomponente des an den Referenzsignaldetektoren 8, 9 empfangenen Referenzsignals 19, die eine Frequenz $f_i$ aufweist, eine Phasenverschiebung von

$$\Delta\phi_i \quad = 2\cdot\pi\cdot f_i\cdot\tau = 2\cdot\pi\cdot i\cdot f0\cdot\tau \qquad (2a)$$
$$= 2\cdot\pi\cdot i\cdot f0\cdot(d/c) \qquad (2b)$$

hat. Dabei bezeichnet d die Weglängendifferenz zwischen einem Lichtpfad eines Lichtpulses, der von dem Strahlteiler 4 aus über den Umlenkspiegel 5 und den Oberflächenbereich 25 zu dem Fotodetektor 11 propagiert, und einem Lichtpfad eines Lichtpulses, der von dem Strahlteiler 4 aus zu den Referenzsignaldetektoren 8, 9 gelenkt wird. Dabei wird angenommen, dass die Länge des Lichtpfads eines Lichtpulses, der von dem Strahlteiler 4 aus zu den Referenzsignaldetektoren 8, 9 gelenkt wird, bekannt ist, da sie nur von der Vorrichtungsgeometrie abhängt.

Wenn bereits ein Schätzwert dS für die Weglängendifferenz d bekannt ist, die diese mit einer Genauigkeit von c/(i·f0) annähert, so dass

$$\left| d - dS \right| < c/f_i = c/(i\cdot f0), \qquad (3)$$

kann auf der Basis von dS der Anteil der Phasenverschiebung auf der rechten Seite von Gleichung (2a) bestimmt werden, der ein ganzzahliges Vielfaches von $2\cdot\pi$ ist. Basierend auf dS wird eine ganze Zahl m ermittelt, so dass

$$d = d' + m\cdot c/f_i, \text{ wobei } \left| d' \right| < c/f_i. \qquad (4)$$

Folglich ist

$$\Delta\phi_i' \quad = \Delta\phi_i - 2\cdot\pi\cdot m$$
$$= 2\cdot\pi\cdot i\cdot f0\cdot(d'/c) \qquad (5)$$

eine im Intervall von 0 bis 2-n liegende Größe, die durch Messung der Phasenlage zwischen einem Ausgangssignal des Fotodetektors 11 und einem Ausgangssignal eines der Referenzsignaldetektoren 8, 9 bestimmt werden kann. Die Größe d', die dann gemäß

$$d' \quad = c\cdot\Delta\phi_i'/(2\cdot\pi\cdot i\cdot f0) \qquad (6)$$

ermittelt werden kann, führt gemäß Gleichung (4) zu einem verbesserten Wert für den Weglängenunterschied d. Da sich die beiden Größen $\Delta\phi_i'$ und $\Delta\phi_i$ nur um ein für die Bestimmung der Phasendifferenz irrelevantes ganzzahliges Vielfaches von $2\cdot\pi$ unterscheiden, werden beide Größen nachfolgend als Phasendifferenz bezeichnet und nicht weiter unterschieden.

Bei der Vorrichtung und dem Verfahren nach Ausführungsbeispielen der Erfindung wird i > 1, typischerweise i >> 1 gewählt, um die Phasendifferenz zu bestimmen. Daher kann bei vorgegebener Messgenauigkeit für eine Phasendifferenz, im Folgenden als Phasenauflösung bezeichnet, die Messgenauigkeit für den Weglängenunterschied und somit die axiale Auflösung erhöht werden.

Zur Veranschaulichung wird angenommen, dass die Phasenauflösung $2\cdot\pi/1000$ beträgt und f0 = 100 MHz. Dann beträgt die axiale Auflösung 3 mm/i und nimmt mit zunehmender Frequenz der Signalkomponente, i, ab. Für i=700, wird beispielsweise eine axiale Auflösung von ungefähr 4,1 $\mu$m erreicht. Somit kann die axiale Auflösung vergrößert werden, indem die Phasendifferenz auf der Basis einer Signalkomponente des Lichtsignals 23 ermittelt wird, die einer hochfrequenten Oberwelle der Folge von Lichtpulsen entspricht, d.h. deren Frequenz die Repetitionsrate multipliziert mit einem Faktor i >> 1 ist. Die Signalkomponente, auf deren Basis die Phasendifferenz bestimmt wird, wird so gewählt, dass sie eine möglichst hohe Frequenz aufweist, bei der die Folge von Lichtpulsen noch ein ausreichendes spektrales Gewicht hat und die eine Signalverarbeitung durch die als Hochfrequenzschaltung ausgestaltete Auswerteschaltung 15 erlaubt.

Die Auswerteschaltung 15 kann die Phasendifferenz ermitteln, indem mehrere Oberwellen miteinander gemischt werden. Durch geeignete Wahl der Oberwellen und durch Mischen einer Signalkomponente des an dem Fotodetektor 11 empfangenen Lichtsignals mit einer Referenzsignalkomponente des von den Referenzsignaldetektoren 8, 9 empfangenen Referenzsignals kann ein Mischprodukt erzeugt werden, das relativ niederfrequent ist, aber die Phasendifferenz der Oberwelle enthält. Dadurch erhält man an Stelle der ursprünglichen Anforderung, kurze Laufzeiten zu messen, die Möglichkeit, eine Phasenmessung bei tiefen Frequenzen vorzunehmen.

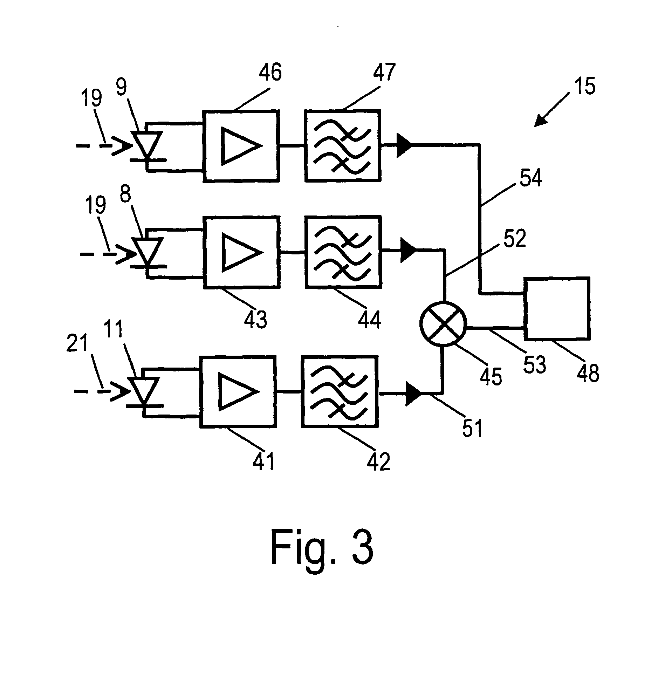

Fig. 3 zeigt ein schematisches Blockschaltbild einer Detektoranordnung und Auswerteschaltung nach einem Ausführungsbeispiel. Die Auswerteschaltung 15 der Vorrichtung 1 von Fig. 1 kann wie in Fig. 3 dargestellt ausgeführt sein.

Auch wenn unter Bezugnahme auf Fig. 3 nur die Verarbeitung des Lichtsignals von dem Fotodetektor 11 erläutert wird, können die Signale mehrerer Fotodetektor 11-14 entsprechend verarbeitet werden, wobei eine entsprechend höhere Zahl von Signalverarbeitungspfaden vorgesehen wird. Zur Veranschaulichung sind der Fotodetektor 11 und die Referenzsignaldetektoren 8, 9 in Fig. 3 ebenfalls dargestellt.

Die Auswerteschaltung 15 umfasst einen Signalverarbeitungspfad für ein von dem Fotodetektor 11 ausgegebenes elektrisches Signal, das das von dem Fotodetektor 11 erfasste Lichtsignal repräsentiert, mit einem eingangsseitigen Verstärker 41 und einem Bandpassfilter 42. Die Auswerteschaltung 15 umfasst weiterhin einen Signalverarbeitungspfad für ein von dem ersten Referenzsignaldetektor 8 ausgegebenes elektrisches Signal, das das von dem ersten Referenzsignaldetektor 8 erfasste Referenzsignal repräsentiert, mit einem eingangsseitigen Verstärker 43 und einem Bandpassfilter 44, und einen Signalverarbeitungspfad für ein von dem zweiten Referenzsignaldetektor 9 ausgegebenes elektrisches Signal, das das von dem zweiten Referenzsignaldetektor 9 erfasste Referenzsignal repräsentiert, mit einem eingangsseitigen Verstärker 46 und einem Bandpassfilter 47. Da die von den Detektoren bzw. Referenzsignaldetektoren ausgegebenen Signale die auf sie einfallenden optischen Signale repräsentieren und die Lichtintensität als Funktion der Zeit wiederspiegeln, werden die von den Detektoren bzw. Referenzsignaldetektoren ausgegebenen Signale ebenso bezeichnet wie die erfassten optischen Signale, d.h. als erfasstes "Lichtsignal" bzw. "Referenzsignal", wobei die von der Auswerteschaltung verarbeiteten Signale elektrische Signale sind.

Das Bandpassfilter 42 ist so eingerichtet, dass eine Signalkomponente des von dem Fotodetektor 11 erfassten Lichtsignals mit einer Frequenz von $n \cdot f0$ durchgelassen wird, wobei $n$ eine natürliche Zahl größer als 1 ist. Wie oben beschrieben, wird $n$ vorteilhaft möglichst groß gewählt, um die axiale Auflösung zu verbessern. Vorteilhaft weist das Bandpassfilter 42 einen Durchlassbereich auf, der so gewählt ist, dass die Übertragung von Signalkomponenten mit Frequenzen von $(n+1) \cdot f0$ und $(n-1) \cdot f0$ im Vergleich zur Übertragung der Signalkomponente mit der Frequenz $n \cdot f0$ deutlich abgeschwächt ist. Dazu kann das Bandpassfilter 42 einen Durchlassbereich mit einer Breite aufweisen, die kleiner als $f0$ ist.

Das Bandpassfilter 44 ist so eingerichtet, dass eine Referenzsignalkomponente des von dem ersten Referenzsignaldetektor 8 erfassten Referenzsignals mit einer Frequenz von $k \cdot f0$ durchgelassen wird, wobei $k$ eine natürliche Zahl ist. Beispielsweise kann $k = n-1$ gewählt werden, so dass das Bandpassfilter 44 eine Referenzsignalkomponente mit der Frequenz $(n-1) \cdot f0$ durchlässt. Vorteilhaft weist das Bandpassfilter 44 einen Durchlassbereich auf, der so gewählt ist, dass die Übertragung von Referenzsignalkomponenten mit Frequenzen von $(k+1) \cdot f0$ und $(k-1) \cdot f0$ im Vergleich zur Übertragung der Referenzsignalkomponente mit der Frequenz $k \cdot f0$ deutlich abgeschwächt ist. Dazu kann das Bandpassfilter 44 einen Durchlassbereich mit einer Breite aufweisen, die kleiner als $f0$ ist.

Ein Mischer 45 ist eingangsseitig mit den Bandpassfiltern 42 und 44 gekoppelt, um die Signalkomponente 51 des Lichtsignals und die Referenzsignalkomponente 52 des Referenzsignals zu empfangen. Das Ergebnis der Frequenzmischung,

$$\cos (n \cdot f0 \cdot t + \Delta\phi_n) \cdot \cos ((n-1) \cdot f0 \cdot t) = [\cos (f0 \cdot t + \Delta\phi_n) + \cos ((2 \cdot n - 1) \cdot f0 \cdot t + \Delta\phi_n)]/2, \quad (7)$$

weist eine niederfrequente Komponente mit der Frequenz $f0$, die der Grundfrequenz des von der Lichtquelle 3 erzeugten Signals entspricht, und eine hochfrequente Komponente auf.

Obwohl der erste Term auf der rechten Seite von Gleichung (7) die Grundfrequenz $f0$ aufweist, ist die Phase $\Delta\phi_n$ im Argument der niederfrequenten Komponente in Gleichung (7) durch Gleichung (2) bestimmt, entspricht also der Phasendifferenz für die Signalkomponente des Lichtsignals mit der Frequenz $n \cdot f0$. Die niederfrequente Komponente wird als Signal 53 an einen Phasenauswerter 48 bereitgestellt, dessen zweiter Eingang mit dem Bandpassfilter 47 gekoppelt ist.

Das Bandpassfilter 47 ist so eingerichtet, dass eine Referenzsignalkomponente des von dem zweiten Referenzsignaldetektor 9 erfassten Referenzsignals mit einer Frequenz von f0 durchgelassen wird. Vorteilhaft weist das Bandpassfilter 47 einen Durchlassbereich auf, der so gewählt ist, dass die Übertragung von Referenzsignalkomponenten mit Frequenzen von $0 \cdot f0$ und $2 \cdot f0$ im Vergleich zur Übertragung der Referenzsignalkomponente mit der Frequenz f0 deutlich abgeschwächt ist. Dazu kann das Bandpassfilter 47 einen Durchlassbereich mit einer Breite aufweisen, die kleiner als f0 ist. Die resultierende Referenzsignalkomponente mit der Frequenz f0 wird als Signal 54 an den Phasenauswerter 48 bereitgestellt.

Der Phasenauswerter 48 bestimmt die Phasendifferenz $\Delta\phi_n$ zwischen dem Signal 53 und dem Signal 54. Da durch das Mischen die Phasendifferenz $\Delta\phi_n$ auf ein Signal mit der Frequenz f0 übertragen wird, kann die Phasenmessung bei tiefen Frequenzen erfolgen.

Da das Signal 54 mithilfe des zweiten Referenzsignaldetektors 9 direkt optisch aufgenommen und nicht aus dem Signal erzeugt wird, das der erste Referenzsignaldetektor 8 aufnimmt, können die Verstärker 43 und 46 in den Signalverarbeitungspfaden für die beiden Referenzsignaldetektoren 8, 9 gezielt ausgewählt werden. Beispielsweise kann der Verstärker 46 so gewählt werden, dass er bei der Frequenz f0 eine gute Leistungscharakteristik aufweist, während der Verstärker 43 so gewählt werden kann, dass er bei der Frequenz $(n-1) \cdot f0$ eine gute Leistungscharakteristik aufweist

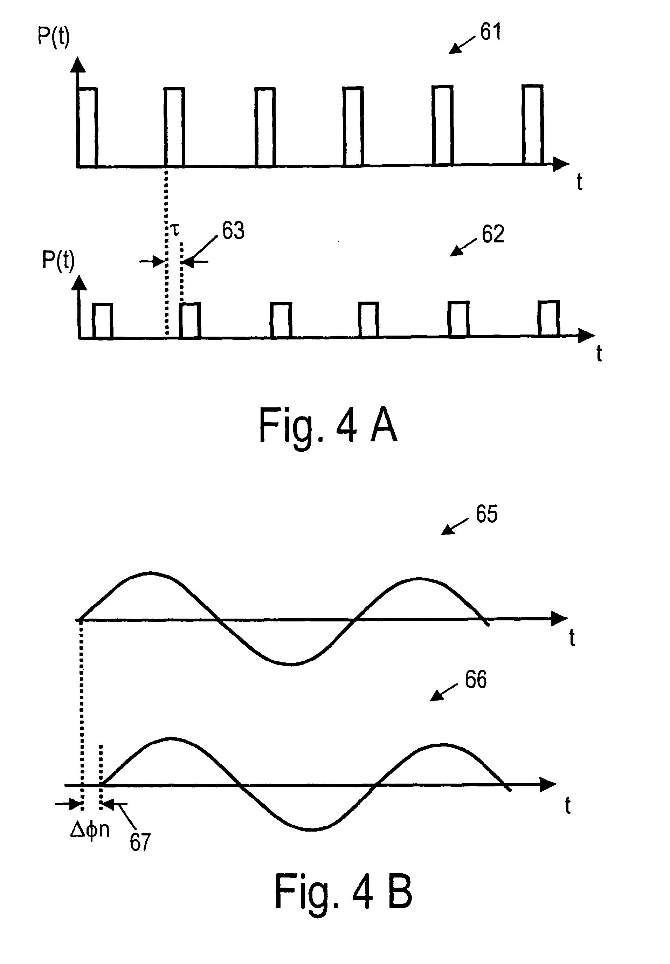

Fig. 4 illustriert verschiedene bei der Detektions- und Auswerteeinrichtung von Fig. 3 auftretende Signale.

Fig. 4A zeigt ein beispielhaftes Referenzsignal 61 und ein beispielhaftes Lichtsignal 62, wobei die von den Fotodetektor 11 empfangene Lichtenergie als Funktion der Zeit dargestellt ist. Das Lichtsignal 62 an dem Fotodetektor 11 weist eine bei 63 dargestellte Zeitverschiebung $\tau$ gegenüber dem Referenzsignal 61 auf.

Fig. 4B zeigt beispielhafte Signale, wie sie an den Eingängen des Phasenauswerters 48 typischerweise auftreten können. Bei 65 ist die aus dem Referenzsignal abgeleitete Grundschwingung mit der Frequenz f0 als Funktion der Zeit dargestellt, während bei 66 das durch Heruntermischen der Signalkomponente des von dem Fotodetektor 11 erfassten Lichtsignals auf die Frequenz f0 erzeugte Signal als Funktion der Zeit dargestellt ist, das ebenfalls die Frequenz f0 aufweist, aber um die Phase $\Delta\phi_n$ relativ zu der aus dem Referenzsignal abgeleiteten Grundschwingung phasenverschoben ist. Die Phasendifferenz $\Delta\phi_n$ wird von dem Phasenauswerter 48 auf eine geeignete Weise ermittelt, beispielsweise durch eine Analog-Digital-Wandlung der Signale und anschließendes Anfitten der Phasendifferenz.

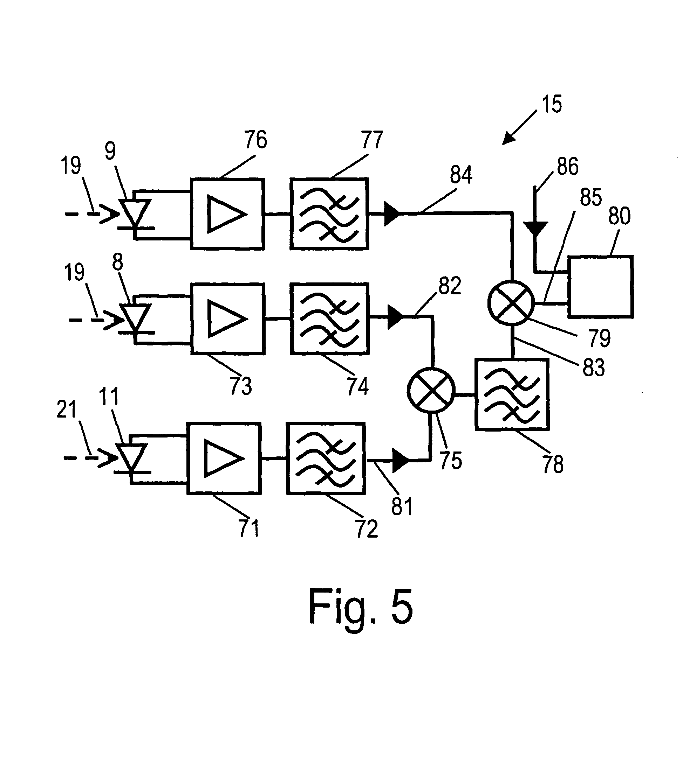

Fig. 5 zeigt ein schematisches Blockschaltbild einer weiteren Detektoranordnung und Auswerteschaltung. Die Auswerteschaltung 15 der Vorrichtung 1 von Fig. 1 kann wie in Fig. 5 dargestellt ausgeführt sein.

Auch wenn unter Bezugnahme auf Fig. 5 nur die Verarbeitung des Lichtsignals von dem Fotodetektor 11 erläutert wird, können die Signale mehrerer Fotodetektoren entsprechend verarbeitet werden, wobei eine entsprechend höhere Zahl von Signalverarbeitungspfaden vorgesehen wird. Zur Veranschaulichung sind der Fotodetektor 11 und die Referenzsignaldetektoren 8, 9 in Fig. 5 ebenfalls dargestellt.

Die Auswerteschaltung 15 weist Eingangsverstärker 71, 73, 76 in Signalverarbeitungspfaden auf, die dem Fotodetektor 11 und den Referenzsignaldetektoren 8 und 9 zugeordnet sind. Jeder der Signalverarbeitungspfade weist weiterhin ein Bandpassfilter 72, 74 bzw. 77 auf.

Das Bandpassfilter 72 ist so eingerichtet, dass eine Signalkomponente des von dem Fotodetektor 11 erfassten Lichtsignals mit einer Frequenz von $n \cdot f0$ durchgelassen wird, wobei n eine natürliche Zahl größer als 1 ist. Wie oben beschrieben, wird n vorteilhaft möglichst groß gewählt, um die axiale Auflösung zu verbessern. Das Bandpassfilter 74 ist so eingerichtet, dass eine Referenzsignalkomponente des von dem ersten Referenzsignaldetektor 8 erfassten Referenzsignals mit einer Frequenz von $k \cdot f0$ durchgelassen wird, wobei k eine natürliche Zahl ist, die so gewählt ist, dass $|n-k|>1$. Das Bandpassfilter 77 ist so eingerichtet, dass eine Referenzsignalkomponente des von dem zweiten Referenzsignaldetektor 9 erfassten Referenzsignals mit einer Frequenz von $(|n-k|-1) \cdot f0$ oder $(|n-k|+1) \cdot f0$ durchgelassen wird.

Die durch das Bandpassfilter 72 bzw. 74 durchgeführte Signalkomponente 81 bzw. Referenzsignalkomponente 82 werden von einem Mischer 75 gemischt. Falls jedes der Bandpassfilter 72 und 74 einen ausreichend schmalen Durchlassbereich mit einer Breite kleiner als f0 aufweist, weist das resultierende Signal eine Komponente mit einer Frequenz von $|n-k| \cdot f0$ und eine weitere, höherfrequente Komponente mit einer Frequenz von $(n+k) \cdot f0$ auf, die durch ein dem Mischer 75 nachgeordnetes Bandpassfilter 78 entfernt wird. Durch den Mischer 75 wird die Phasendifferenz $\Delta\phi_n$ des von dem Fotodetektor 11 erfassten Lichtsignals somit in einen Zwischenfrequenzbereich bei der Frequenz $|n-k| \cdot f0$ übertragen. Das in den Zwischenfrequenzbereich übertragene Signal 83 wird an einen weiteren Mischer 79 bereitgestellt, dessen zweiter Eingang von dem Bandpassfilter 77 ein Signal 84 empfängt, das die Referenzsignalkomponente des Referenzsignals mit einer Frequenz von beispielsweise $(|n-k|-1) \cdot f0$ ist. Durch Mischen der Signale 83 und 84 wird, ähnlich wie oben unter Bezugnahme auf Gleichung (7) erläutert, ein Signal 85 erzeugt, das eine mit der Grundfrequenz f0 oszillierende Komponente mit einer Phasenverschiebung von $\Delta\phi_n$ aufweist. Eine von dem Mischer 85 ebenfalls erzeugte Hochfrequenzkomponenten kann gegebenenfalls durch ein weiteres Filter entfernt werden.

Wenn, wie in Fig. 5 dargestellt, die Signalkomponente des von dem Fotodetektor 11 erfassten Lichtsignals zunächst auf eine Zwischenfrequenz heruntergemischt wird, ist es nicht erforderlich, dass die Bandpassfilter 72, 74 einen Durchlassbereich aufweisen, in dem nur eine Vielfache der Grundfrequenz f0 liegt. Ein Zwischensignal mit einer Komponente, die eine Frequenz von |n-k|·f0 und im Wesentlichen eine Phasenverschiebung von etwa $\Delta\phi_n$ aufweist, wird von dem Mischer 75 auch dann erzeugt, wenn das Bandpassfilter 72 und/oder das Bandpassfilter 74 jeweils mehrere Vielfache der Grundfrequenz f0, also einen Abschnitt des Frequenzkamms und nicht nur eine einzelne Oberwelle, durchlassen. Da die Phasenlage der Signalkomponenten des von dem Fotodetektor 11 erfassten Lichtsignals mit der Frequenz i·f0 gemäß Gleichung (5) linear mit i zunimmt, ist das Bandpassfilter 72 bevorzugt so eingerichtet, dass die Anzahl von Oberwellen im Durchlassbereich des Bandpassfilters 72 klein im Vergleich zu n ist, damit die Variation der Phasenlage mit der Frequenz im Durchlass vernachlässigbar bleibt.

Vorteilhaft sind die Bandpassfilter 72 und 74 so eingerichtet, dass ihre Durchlassbereiche nicht überlappen. In diesem Fall kann aus der Komponente des von dem Mischer 75 ausgegebenen Zwischensignals, die eine Frequenz von |n-k|·f0 aufweist, die Phasenverschiebung $\Delta\phi_n$ selbst dann ermittelt werden, wenn die Frequenzcharakteristik der Bandpassfilter 72 und 74 und somit das spektrale Gewicht der einzelnen Oberwellen in den Signalen 81 und 82 nicht bekannt ist.

Falls beispielsweise f0 = 100 MHz, n = 700 und k = 600, und weiterhin der Durchlassbereich des Bandpassfilters 72 das Frequenzintervall von 69,9 GHz bis 70,1 GHz überdeckt, so dass Signalkomponenten des von dem Fotodetektor 11 erfassten Lichtsignals mit Frequenzen 69,9 GHz, 70,0 GHz und 70,1 GHz durchgelassen werden, und der Durchlassbereich des Bandpassfilters 74 das Frequenzintervall von 59,9 GHz bis 60,1 GHz überdeckt, so dass Signalkomponenten des von dem ersten Referenzsignaldetektor 8 erfassten Referenzsignals mit Frequenzen 59,9 GHz, 60,0 GHz und 60,1 GHz durchgelassen werden, weist das von dem Mischer 75 ausgegebene Zwischensignal eine Komponente auf, die eine Frequenz von |n-k|·f0 und eine Phasenverschiebung von im Wesentlichen $\Delta\phi_n$ hat.

Somit sind die Anforderungen an die Breite des Durchlassbereichs der Bandpassfilter 72, 74, der bei höheren Frequenzen als der Durchlassbereich der Bandpassfilter 77 und 78 liegt, weniger streng, wenn die Signalkomponente des von dem Fotodetektor 11 erfassten Lichtsignals mit Frequenz n·f0 mehrstufig heruntergemischt wird, da der Durchlassbereich der Bandpassfilter mehrere Oberwellen i·f0 durchlassen kann. Der Durchlassbereich der Bandpassfilter 77 und 78 liegt bei niedrigeren Frequenzen, bei dem vorgenannten Beispiel mit f0 = 100 MHz, n = 700 und k = 600 bei 10,0 GHz für das Bandpassfilter 78 und bei 9,9 GHz für das Bandpassfilter 77, so dass diese Bandpassfilter 77, 78 leichter so ausgestaltet werden können, dass sie einen schmalen Durchlassbereich aufweisen, als die Bandpassfilter 72, 74 mit einem Durchlassbereich bei höheren Frequenzen von beispielsweise 60 oder 70 GHz.

Der weitere Mischer 79 ist ausgangsseitig mit einem Phasenauswerter 80 gekoppelt, dessen zweiter Eingang ein mit der Grundfrequenz f0 oszillierendes Signal 86 empfängt. Das Signal 86 kann beispielsweise von einem Synchronausgang der Lichtquelle 3 bereitgestellt werden. Alternativ kann das Signal 86 auch erzeugt werden, indem die Referenzsignalkomponente mit der Frequenz f0 aus dem von einem Referenzsignaldetektor erfassten Referenzsignal selektiert wird, wie dies in Fig. 3 dargestellt ist.

Wie unter Bezugnahme auf Fig. 1-5 erläutert, kann bei der Vorrichtung 1 von Fig. 1 über die Phasenverschiebungen von Oberwellen der Lichtsignale 21-24 die Weglänge von dem Strahlteiler 4 über den Umlenkspiegel 5 und den Oberflächenbereich 25 zu den entsprechenden Fotodetektoren 11-14 gemäß Gleichungen (4) und (6) ermittelt werden. Aus diesen vier Weglängen und den bekannten Positionen der Fotodetektoren 11-14 kann die Position des Oberflächenbereichs bestimmt werden.

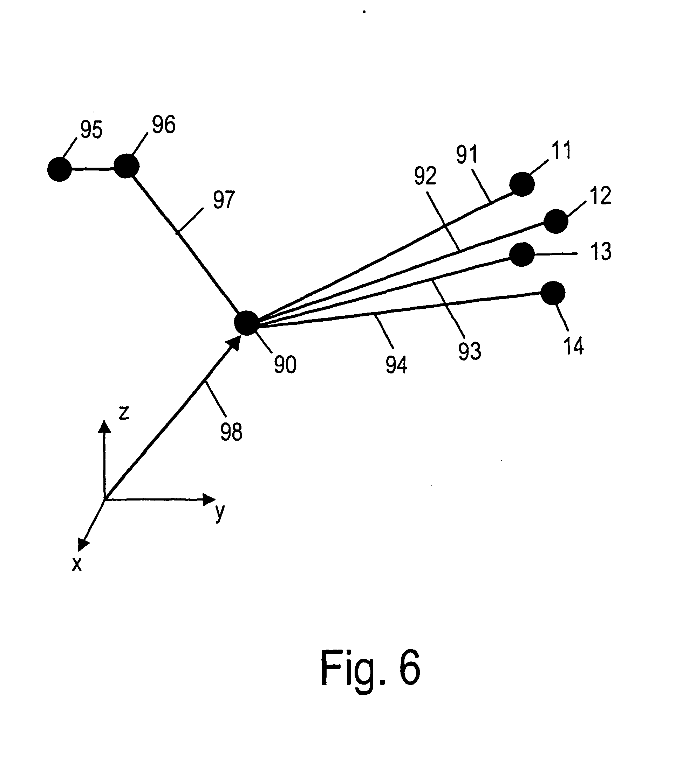

Fig. 6 veranschaulicht die Bestimmung der Position eines Oberflächenbereichs, die schematisch als Punkt 90 in einem dreidimensionalen Raum dargestellt ist.

Jede der vier basierend auf den Signalen von den Fotodetektoren 11-14 ermittelten Weglängen entspricht der Summe aus einem Abstand 91-94 zwischen der Position 90 des Oberflächenbereichs und dem entsprechenden Fotodetektor 11-14 sowie der Weglänge 97 von dem Strahldurchtrittspunkt 95 des Strahlteilers 4 über den Strahlauftreffpunkt 96 des Umlenkspiegels 5 zu der Position 90 des Oberflächenbereichs. Werden die vier basierend auf den Lichtsignalen 21-24 der Fotodetektoren 11-14 gemäß Gleichungen (4) und (6) bestimmten Weglängen mit $d_1$, $d_2$, $d_3$ und $d_4$ und die Weglänge 97 mit $r_0$ bezeichnet, so ist

$$d_1 = r_0 + \left| \vec{x}_1 - \vec{x}_{OF} \right|, \qquad (8)$$

$$d_2 = r_0 + \left| \vec{x}_2 - \vec{x}_{OF} \right|, \qquad (9)$$

$$d_3 = r_0 + \left| \vec{x}_3 - \vec{x}_{OF} \right| \text{ und} \qquad (10)$$

13

$$d_4 = r_0 + \left| \vec{x}_4 - \vec{x}_{OF} \right|. \qquad\qquad (11)$$

Auf der rechten Seite von Gleichungen (8) bis (11) wird mit $\overline{x}_j$ mit j= 1, 2, 3, 4 der Ortsvektor der Fotodetektoren 11-14, der als bekannt vorausgesetzt wird, und mit $\overline{x}_{OP}$ der zu bestimmende Ortsvektor 98 der Position 90 des Oberflächenbereichs bezeichnet. Durch Lösen des durch Gleichungen (8) bis (11) definierten Gleichungssystems können die drei Komponenten des Ortsvektors 98 und somit die Position des Oberflächenbereichs 90 bestimmt werden. Bei der Vorrichtung 1 von Fig. 1 kann das Gleichungssystem der Gleichungen (8) bis (11) von der Recheneinheit 7 numerisch gelöst werden, um die Position des Oberflächenbereichs 90 zu bestimmen.

Da der Nullpunkt des Koordinatensystems beliebig gewählt werden kann, kann die Position eines Fotodetektors, beispielsweise des Fotodetektors 11, als Nullpunkt definiert werden. Die Vektoren $\overline{x}_j$ mit j= 2, 3, 4 sind dann die Relativpositionen der weiteren Fotodetektoren 12, 13, 14 bezüglich des Fotodetektors 11.

Darüber hinaus kann aus dem Gleichungssystem der Gleichungen (8) bis (11) die von den Lichtpulsen von dem Strahlteiler 4 zu dem Oberflächenbereich 25 zurückgelegte Weglänge $r_0$ ermittelt werden. Basierend auf dem bestimmten Wert für die Weglänge $r_0$ kann die Recheneinheit 7 die Fokussierungsoptik 17 so ansteuern, dass der auf die Oberfläche 2 gelenkte Lichtstrahl 2 auf den Oberflächenbereich 25 fokussiert wird. Für den verkleinerten Oberflächenbereich kann dann die Positionsbestimmung wiederholt werden, um eine laterale Auflösung bei der Oberflächenvermessung zu verbessern.

Es kann auch eine Detektoranordnung mit mehr als vier Fotodetektoren verwendet werden. Durch Verwendung weiterer Fotodetektoren kann die Genauigkeit der Positionsbestimmung für den Oberflächenbereich erhöht werden. Dazu können Verfahren eingesetzt werden, wie sie aus dem Globalen Positionsbestimmungssystem (GPS) bekannt sind, wenn eine Position durch ein überbestimmtes Gleichungssystem ermittelt werden soll. Die Verwendung einer Detektoranordnung mit mehr als drei Fotodetektoren kann auch bei nicht kooperativen Oberflächen vorteilhaft sein, die beispielsweise schmale Streukegel aufweisen, und/oder wenn Abschattungen in dem Raumbereich erwartet werden.

Während bei der Vorrichtung 1 von Fig. 1 eine separate Recheneinheit 7 zur Bestimmung der Position des Oberflächenbereichs vorgesehen ist, können die Recheneinheit 7 und die Auswerteschaltung 15 auch in einem Gerät kombiniert sein. Bei der unter Bezugnahme auf Fig. 1-6 beschriebenen Vorrichtung ist die Detektoranordnung mit den Fotodetektoren 11-14 in einer Baugruppe zusammengefasst. Jedoch können die Fotodetektoren auch in mehreren Baugruppen zusammengefasst sein.

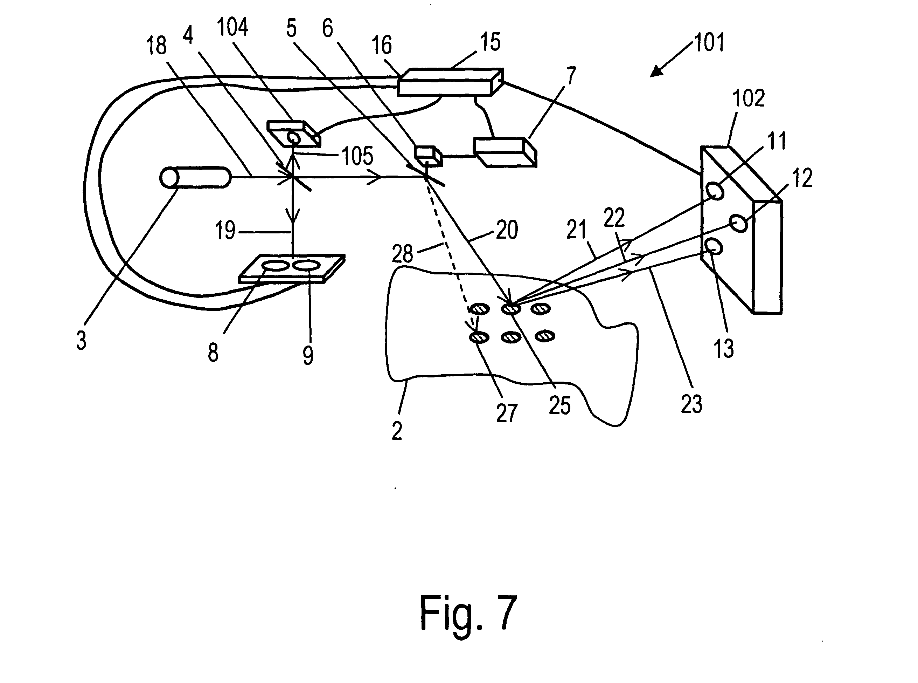

Fig. 7 zeigt eine Vorrichtung 101 zum Vermessen einer Oberfläche nach einem weiteren Ausführungsbeispiel. In Fig. 7 sind Komponenten, die mit unter Bezugnahme auf Fig. 1 erläuterten Komponenten identisch sind und dieselbe Funktionsweise aufweisen, mit demselben Bezugszeichen bezeichnet. Nachfolgend werden nur die Unterschiede der Vorrichtung 101 zur Vorrichtung 1 näher erläutert.

Bei der Vorrichtung 101 ist eine erste Baugruppe 102 mit drei Fotodetektoren 11-13 und ein davon separater weiterer Fotodetektor 104 vorgesehen, um die Folge von Lichtpulsen zu empfangen, die von dem Oberflächenbereich 25 gestreut wurde. Der Fotodetektor 104 ist derart angeordnet, dass er Streulicht 105 von dem Oberflächenbereich 25 empfängt, das von dem Oberflächenbereich 25 in Richtung des Umlenkspiegels 5 gestreut oder reflektiert wird und über den Umlenkspiegel 5 und den Strahlteiler 4 auf den Fotodetektor 104 gelenkt wird.

Bei der Vorrichtung 101 können auf dieselbe Weise, wie sie unter Bezugnahme auf Fig. 1-6 für die Vorrichtung 1 beschrieben wurde, basierend auf Signalkomponenten der an den Fotodetektoren 11-13 und 104 erfassten Lichtsignale über die Phasendifferenz der Signalkomponenten zu einer Referenzsignalkomponente vier Weglängen für Lichtpulse bestimmt werden, die den Propagationswegen der Lichtpulse zu den Fotodetektoren 11-13 und 104, jeweils ausgehend von dem Strahlteiler 4, entsprechen.

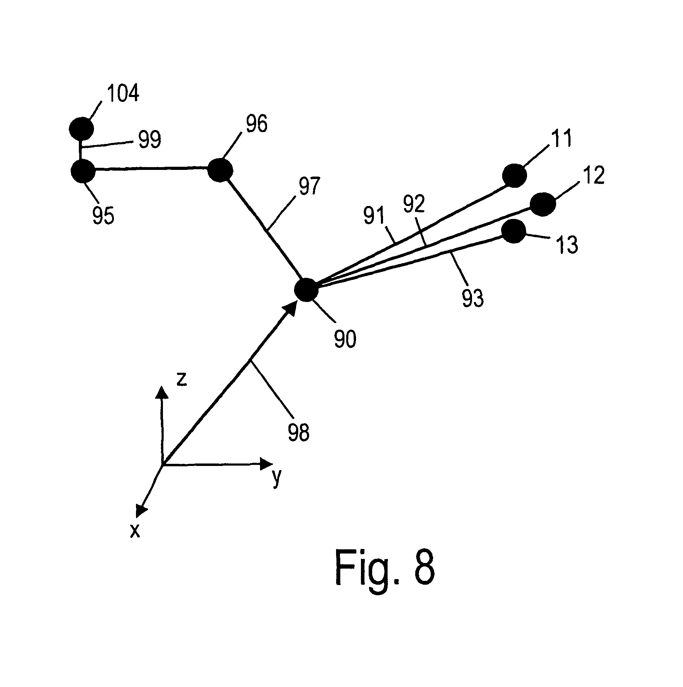

Fig. 8 veranschaulicht die Bestimmung der Position eines Oberflächenbereichs, die schematisch als Punkt 90 in einem dreidimensionalen Raum dargestellt ist, bei der Vorrichtung von Fig. 7. In Fig. 8 werden dieselben Bezugszeichen für Strecken, Positionsvektoren und Positionen verwendet wie in Fig. 6.

Die Weglänge für Lichtpulse, die von den Fotodetektoren 11-13 erfasst werden, ist gegeben durch die Weglänge von dem Strahldurchtrittspunkt 95 des Strahlteilers 4 über den Strahlauftreffpunkt 96 des Umlenkspiegels 5 zu der Position 90 des Oberflächenbereichs plus dem Abstand 91-93 des jeweiligen Fotodetektors 11-13 von der Position 90 des Oberflächenbereichs, wie in Gleichungen (8) bis (10) angegeben.

Die Weglänge für Lichtpulse, die von dem Fotodetektor 104 erfasst werden, ist gegeben durch das Zweifache der Weglänge von dem Strahldurchtrittspunkt 95 des Strahlteilers 4 über den Strahlauftreffpunkt 96 des Umlenkspiegels 5 zu der Position 90 des Oberflächenbereichs plus einem Abstand 99 zwischen dem Strahldurchtrittspunkt 95 des Strahlteilers 4 und dem Fotodetektor 104,

$$d_4 = 2 \cdot r_0 + r_S, \qquad\qquad (11)$$

wobei $r_S$ den Abstand zwischen dem Strahldurchtrittspunkt 95 des Strahlteilers 4 und dem Fotodetektor 104 bezeichnet, der durch die Vorrichtungsgeometrie bedingt ist und als bekannt vorausgesetzt werden kann.

Bei bekanntem $r_S$ kann aus Gleichung (11) unmittelbar $r_0$ bestimmt werden. Aus Gleichungen (8) bis (10) können dann die drei Koordinaten der Position des Oberflächenbereichs berechnet werden.

Die Vorrichtungen und Verfahren nach verschiedenen Ausführungsbeispielen erfordern keine genaue Kenntnis der Position, von der aus die Folge von Lichtpulsen auf die Oberfläche eingestrahlt wird, da eine ausreichende Zahl von Detektoren vorgesehen wird, um unbekannte Wegstrecken bei der Positionsbestimmung des Oberflächenbereichs zu eliminieren. Die Vorrichtungen und Verfahren sind daher robust gegenüber größeren Schwankungen in der Position optischer Komponenten, die zum Einstrahlen der Folge von Lichtpulsen auf die Oberfläche verwendet werden. Dies erlaubt den Einsatz kostengünstigerer Komponenten zum Scannen der Oberfläche. Beispielsweise kann anstelle eines kardanisch aufgehängten Umlenkspiegels ein Paar von separat schwenkbaren oder drehbaren Spiegeln verwendet werden.

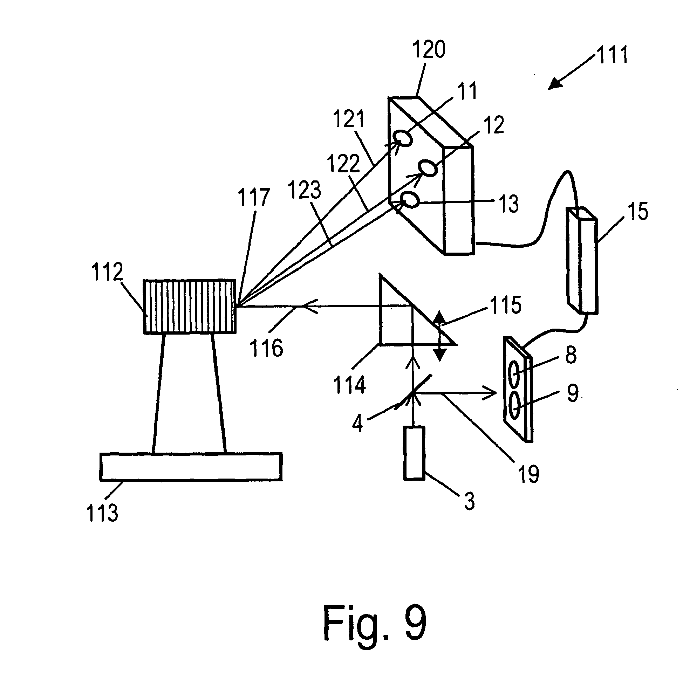

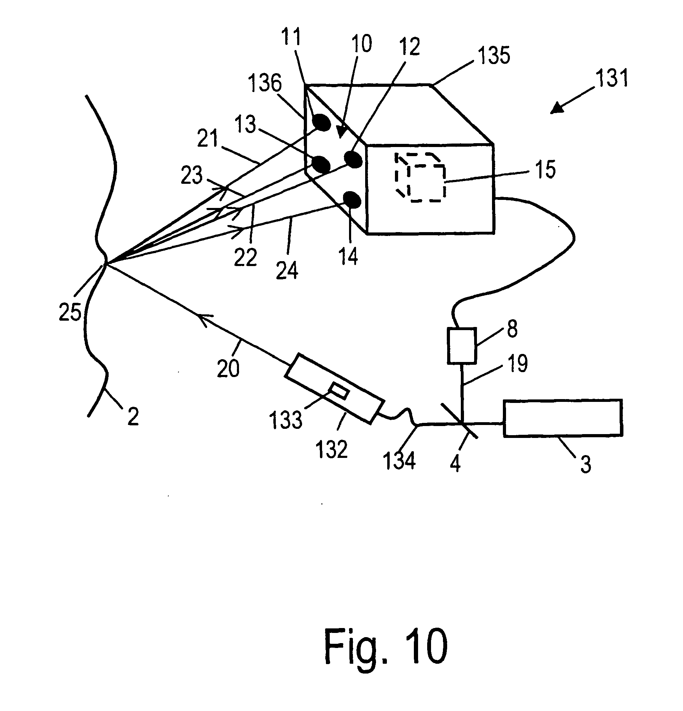

Vorrichtungen und Verfahren nach Ausführungsbeispielen der Erfindung sind in Kombination mit zahlreichen Scanverfahren einsetzbar, mit denen die zu vermessende Oberfläche abgetastet wird, wie nachfolgend unter Bezugnahme auf Fig. 9 und 10 noch näher erläutert wird.

Fig. 9 zeigt eine Vorrichtung 111 zum Vermessen einer Oberfläche nach einem weiteren Ausführungsbeispiel. In Fig. 9 sind Komponenten, die mit unter Bezugnahme auf Fig. 1 erläuterten Komponenten identisch sind und dieselbe Funktionsweise aufweisen, mit demselben Bezugszeichen bezeichnet. Nachfolgend werden nur die Unterschiede der Vorrichtung 111 zur Vorrichtung 1 näher erläutert.

Die Vorrichtung 111 weist einen Drehtisch 113 auf, auf dem ein Objekt positioniert ist, dessen Oberfläche 112 vermessen werden soll. Der Drehtisch 113 ist mit einem Winkelsensor ausgestattet, um eine Drehposition des Drehtisches 113 zu erfassen.

Bei der Vorrichtung 111 wird die Oberfläche 112 durch eine Kombination optischer Verfahren und weiterer Sensorik vermessen. Insbesondere kann durch die optischen Messungen in Verbindung mit der durch den Winkelsensor ermittelten Drehposition des Drehtisches 113 die gesamte Oberfläche 112 vermessen werden.

Von der Lichtquelle 3 ausgegebenes Licht wird über ein 90°-Umlenkprisma als intensitätsmodulierter Lichtstrahl 116 auf die Oberfläche 112 gelenkt. Die Position des Umlenkprismas 114 kann in einer Raumrichtung verändert werden, wie bei 115 angedeutet. Ein Oberflächenbereich 117 der Oberfläche 112, auf den die Folge von Lichtpulsen eingestrahlt wird, kann durch Verschieben des Umlenkprismas 114 und durch Drehen des Drehtisches 113 über die Oberfläche 112 gescannt werden. Die Ebene, in der Licht auf die Oberfläche 116 eingestrahlt wird, ist dabei ortsfest.

Die Vorrichtung 111 weist eine Detektoranordnung 120 mit drei Fotodetektoren 11-13 auf. Von dem Oberflächenbereich 117 wird die Folge von Lichtpulsen als Streulicht in Richtung der Fotodetektoren 11-13 gestreut. Die Fotodetektoren 11-13 erfassen die Lichtsignale 121-123. Die Auswerteschaltung 15 ermittelt eine Phasendifferenz zwischen Signalkomponenten der von den Fotodetektoren 11-13 erfassten Lichtsignale 121-123 und dem von den Referenzsignaldetektoren 8, 9 erfassten Referenzsignal, wobei die Phasendifferenz bei einer Oberwelle der Folge von Laserpulsen ermittelt wird.

Aus den drei ermittelten Phasendifferenzen und den zugehörigen Weglängendifferenzen der Lichtpulse kann wiederum die Position des Oberflächenbereichs 117 ermittelt werden. Da die Einfallebene des Lichtstrahls 116 vorgegeben ist, müssen nur die Koordinaten in der Einfallebene ermittelt werden. Da drei Fotodetektoren 11-13 vorgesehen sind, ist dies selbst dann möglich, wenn die vertikale Position des Umlenkprismas 114 und der Abstand des Strahlteilers 4 von dem Umlenkprisma nicht genau bekannt ist. Basierend auf den drei Phasendifferenzen, die den Lichtsignalen 121-123 zugeordnet sind, kann neben der Position des Oberflächenbereichs 117 in der Einfallebene des Lichtstrahls 116 auch die Weglänge des Lichts von dem Strahlteiler 4 zu dem Oberflächenbereich 117 bestimmt werden.

Fig. 10 zeigt eine Vorrichtung 131 zum Vermessen einer Oberfläche nach einem weiteren Ausführungsbeispiel. In Fig. 10 sind Komponenten, die mit unter Bezugnahme auf Fig. 1 erläuterten Komponenten identisch sind und dieselbe Funktionsweise aufweisen, mit demselben Bezugszeichen bezeichnet. Nachfolgend werden nur die Unterschiede der Vorrichtung 131 zur Vorrichtung 1 näher erläutert.

Die Vorrichtung 131 umfasst die Lichtquelle 3, die eine Folge von Lichtpulsen an einen Strahlteiler 4 ausgibt. Ein Teil der Folge von Lichtpulsen wird von dem Strahlteiler 4 als Referenzsignal zu einem Referenzsignaldetektor 8 geführt, der das erfasste Referenzsignal an ein kombiniertes Detektions- und Auswertegerät 135 ausgibt.

Bei der Vorrichtung 131 ist die Lichtlenkeinrichtung als Handgerät 132 ausgestaltet. Eine Ausgabe der Folge von Lichtpulsen aus dem Handgerät 132 wird mittels eines Schalters 133 an dem Handgerät 132 gesteuert. Die Folge von Lichtpulsen wird über einen Lichtwellenleiter 134, beispielsweise eine Glasfaser, zu dem Handgerät 132 geführt, und tritt in einem Lichtstrahl 20 von einer Endfläche des Handgeräts 132 aus. Das Handgerät ist frei in alle Richtungen bewegbar, so dass die Folge von Lichtpulsen in dem Lichtstrahl 20 auf einen beliebigen Oberflächenbereich 25 der zu vermessenden Oberfläche 2 eingestrahlt werden kann.

Zum Erfassen und Auswerten von Lichtsignalen 21-24, die von dem Oberflächenbereich 25 gestreut werden und die gestreute Folge von Lichtpulsen umfassen, ist ein Detektions- und Auswertegerät 135 vorgesehen. An einer Seitenfläche 136 des Detektions- und Auswertegeräts 135 ist eine Detektoranordnung 10 mit vier Fotodetektoren 11-14 vorgesehen. Die Fotodetektoren 11-14 sind derart angeordnet, dass auf jeder beliebig gewählten Geraden maximal zwei der vier Fotodetektoren 11-14 angeordnet sind. Die Verarbeitung der von den Fotodetektoren 11-13 erfassten Lichtsignale erfolgt durch eine in dem Detektions- und Auswertegerät 135 integrierte Auswerteschaltung 15 basierend auf Phasendifferenzen, die für Signalkomponenten der Lichtsignale 21-24 ermittelt werden, deren Frequenz ein Vielfaches der Grundfrequenz f0 ist.

Da vier Fotodetektoren 11-14 an dem Detektions- und Auswertegerät 135 vorgesehen sind, kann die Position des Oberflächenbereichs 25 selbst dann bestimmt werden, wenn die Position des Handgeräts 132 nicht bekannt ist. Insbesondere kann der unbekannte Parameter, der der Phasenlage des Signals beim Auftreffen auf den Oberflächenbereich 25 entspricht, bei der Bestimmung der drei Koordinaten des Oberflächenbereichs 25 eliminiert werden.

Im Gegensatz zu herkömmlichen Handgeräten, die zur optischen Abstandsmessung eingesetzt werden, können mit der Vorrichtung 131 alle drei Koordinaten des bestrahlten Oberflächenbereichs, nicht nur ein Abstand zwischen Handgerät und Oberflächenbereich, bestimmt werden.

Indem mit dem Handgerät 132 der Lichtstrahl 20 über mehrere Oberflächenbereiche geführt wird, kann die Oberfläche 2 vermessen werden. Das Handgerät 132 kann natürlich nicht nur durch einen menschlichen Bediener betätigt werden, sondern kann beispielsweise auch eingesetzt werden, wenn eine Oberfläche robotergestützt abgetastet werden soll.

Bei den oben unter Bezugnahme auf Fig. 1-10 erläuterten Vorrichtungen und Verfahren werden von Fotodetektoren Lichtsignale erfasst, die von einem Oberflächenbereich gestreut werden. Jedenfalls für größere Abstände zwischen Detektoranordnung und Oberfläche kann der Signalpegel gering sein. Darüber hinaus treffen auf die Fotodetektoren 11-14 und die Referenzsignaldetektoren 8, 9 Nutzsignale auf, bei denen es sich um kurze Pulse handelt. Die Pulsdauer kann beispielsweise 100 fs betragen. Der zeitliche Abstand T0 zwischen aufeinanderfolgenden Pulsen ist durch den Kehrwert der Repetitionsrate gegeben. Für f0 = 100 MHz ist T0 beispielsweise 10 ns. Für die genannten beispielhaften Größen trifft nur in einem Zeitintervall, dessen Länge 100 fs/10 ns = $1/10^5$ der Zeitdauer T0 zwischen aufeinanderfolgenden Lichtpulsen beträgt, ein Nutzsignal an den Fotodetektoren 11-14 und Referenzsignaldetektoren 8, 9 ein. Es liegt eine sehr große Zeitspanne vor, in der kein Nutzsignal die Fotodetektoren erreicht.

Es können verschiedene Maßnahmen ergriffen werden, um den Signalpegel zu erhöhen und das Signal/Rausch-Verhältnis zu verbessern.

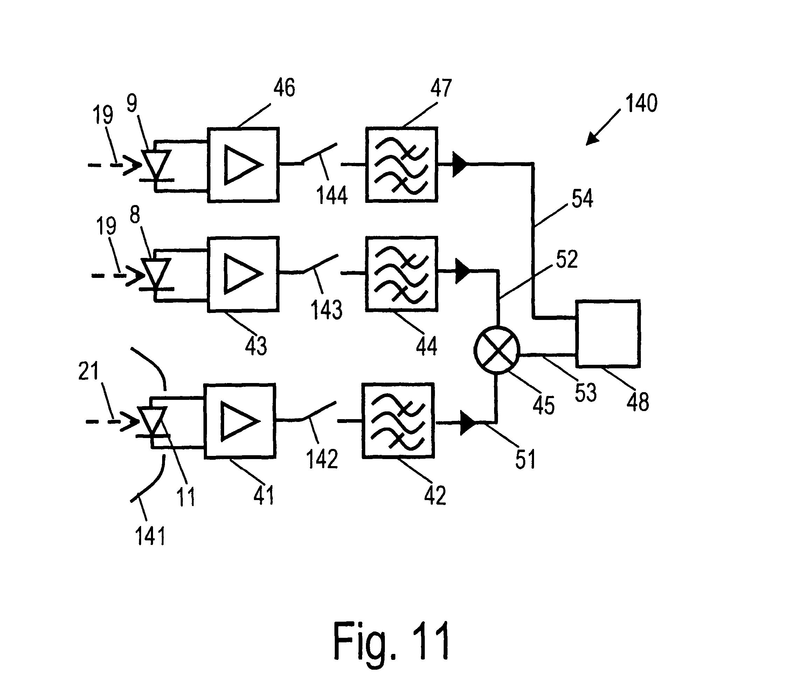

Fig. 11 ist eine schematische Darstellung von Maßnahmen, die an der Detektoranordnung und Auswerteschaltung jeder der oben erläuterten Vorrichtungen vorgenommen werden können. Komponenten des Blockschaltbilds von Fig. 11, die eine identische Funktionsweise wie bereits unter Bezugnahme auf Fig. 3 erläuterte Komponenten aufweisen, sind mit denselben Bezugszeichen versehen und werden hier nicht weiter erläutert.

Zur Erhöhung des Signalpegels kann jeder Fotodetektor der Detektoranordnung mit einem optischen Element 141, beispielsweise einer Linse oder einem Hohlspiegel versehen werden. Auch wenn schematisch nur ein Hohlspiegel für den Fotodetektor 111 dargestellt ist, kann entsprechend jeder Fotodetektor der Detektoranordnung mit einem Hohlspiegel oder einer Linse versehen werden, um den Signalpegel zu erhöhen.

Die Signalverarbeitungspfade der Auswerteschaltung 140 von Fig. 11 sind mit steuerbaren schaltbaren Elementen 142-144 versehen. Diese erlauben es, dass in Zeitintervallen, in denen keiner der von der Lichtquelle 3 erzeugten Lichtpulse an den Fotodetektoren 11-14 bzw. 8 und 9 eintreffen kann, eine Signalverarbeitung der von den Fotodetektoren 11-14 bzw. 8 und 9 an die Auswerteschaltung 140 ausgegebenen Signale unterdrückt wird. Die schaltbaren Elemente 142-144, beispielsweise Transistoren, öffnen die Signalverarbeitungspfade in den Zeitintervallen, in denen keine Lichtpulse auf den zugeordneten Detektor einfallen können.

Durch eine solche selektive Deaktivierung der Signalverarbeitung kann Rauschen, das während des Zeitintervalls, in dem kein Nutzsignal verarbeitet wird, zu einer Verschlechterung des Signal/Rausch-Verhältnisses beitragen könnte, unterdrückt werden. Das verhältnismäßig kurze Zeitintervall, in dem Signale erfasst und verarbeitet werden, also die Öffnungszeit für das Durchlassen eines Nutzpulses, wird in Abhängigkeit von der Repetitionsrate und maximal zu erwartenden Laufzeitunterschieden zwischen Nah- und Fernpunkt einer Messstrecke so gewählt, dass sichergestellt ist, dass jeder Lichtpuls erfasst und verarbeitet wird.

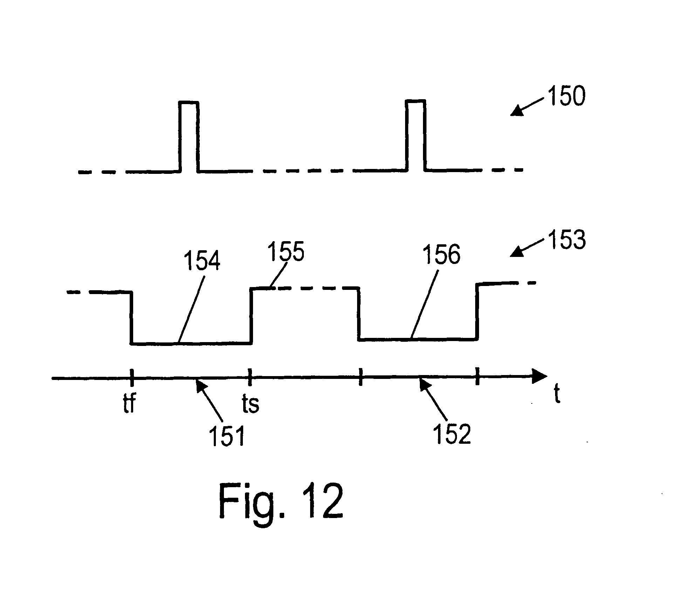

Fig. 12 zeigt beispielhaft ein Nutzsignal 150 aus einer Folge von Lichtpulsen mit einem großen zeitlichen Abstand zwischen den Lichtpulsen. Fig. 12 zeigt weiterhin einen Schaltzustand 153 einer Sperreinrichtung, die eine Signalerfassung und/oder - verarbeitung nur in Zeitintervallen 151 und 152 erlaubt, in denen ein Lichtpuls eintreffen kann. Die Sperreinrichtung kann durch steuerbare Schalter in den Signalverarbeitungspfaden der Auswerteschaltung ausgebildet sein. Die Grenzen des Zeitintervalls 151 sind durch die früheste mögliche Ankunftszeit tf eines Lichtpulses und die späteste mögliche Ankunftszeit ts des Lichtpulses gegeben. In den Zeitintervallen 151 und 152 weist die Sperreinrichtung einen Schaltzustand 154 bzw. 156 auf, der die Signalerfassung und -verarbeitung erlaubt, während die Sperreinrichtung zu jeder anderen Zeit einen Schaltzustand 155 aufweist, in dem die Signalerfassung und/oder -verarbeitung unterdrückt wird.

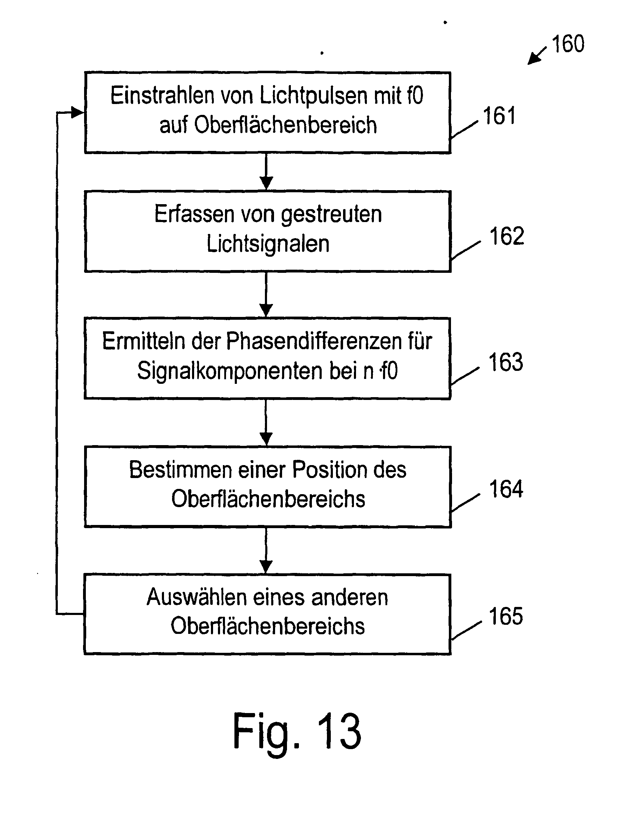

Fig. 13 ist eine Flussdiagrammdarstellung eines Verfahrens 160 zum Vermessen einer Oberfläche. Das Verfahren kann mit der unter Bezugnahme auf Fig. 1-6 erläuterten Vorrichtung 1, mit der unter Bezugnahme auf Fig. 7 und 8 erläuterten Vorrichtung 101, mit der unter Bezugnahme auf Fig. 9 erläuterten Vorrichtung 111, mit der unter Bezugnahme auf Fig. 10 erläuterten Vorrichtung 131 oder mit einer Vorrichtung nach einem weiteren Ausführungsbeispiel durchgeführt werden.

Bei 161 wird eine Folge von Lichtpulsen mit einer Repetitionsrate auf einen Oberflächenbereich eingestrahlt. Die Folge von Lichtpulsen kann unter Verwendung von steuerbaren optischen Ablenkeinrichtungen oder unter Verwendung eines Handgeräts eingestrahlt werden.

Bei 162 werden mehrere von dem Oberflächenbereich gestreute Lichtsignale erfasst. Dazu wird eine Mehrzahl von Fotodetektoren verwendet, wobei die Fotodetektoren so angeordnet werden, dass keiner der Fotodetektoren auf einer Geraden liegt, die durch den Oberflächenbereich und einen weiteren Fotodetektor verläuft.

Bei 163 wird für jedes der Lichtsignale eine Phasenverschiebung einer Signalkomponente des Lichtsignals ermittelt, wobei die Signalkomponente so gewählt wird, dass sie eine Frequenz aufweist, die einem Vielfachen $n \cdot f0$ der Repetitionsrate $f0$ entspricht, wobei $n>1$. Die Signalkomponente kann unter Verwendung eines Bandpassfilters aus den erfassten Lichtsignalen erzeugt werden. Die Phasenverschiebung kann in Bezug auf eine Referenzsignalkomponente ermittelt werden, die eine Frequenz aufweist, die ebenfalls dem Vielfachen $n \cdot f0$ der Repetitionsrate $f0$ entspricht.

Bei 164 wird basierend auf den ermittelten Phasendifferenzen die Position des Oberflächenbereichs bestimmt. Dabei können drei Koordinaten des Oberflächenbereichs bestimmt werden.

Bei 165 wird ein neuer Oberflächenbereich ausgewählt, und die Schritte 161 bis 164 werden für den neuen Oberflächenbereich wiederholt. Die Iteration wird fortgesetzt, bis die Oberfläche mit ausreichender Genauigkeit, d.h. mit ausreichender Anzahl oder Dichte von Stützpunkten für die Vermessung, vermessen wurde.

Wie im Zusammenhang mit Gleichungen (2)-(6) erläutert wurde, kann die Bestimmung der Position des Oberflächenbereichs bei 164 erfordern, dass bereits ein ausreichend guter Schätzwert für die Weglängen existiert, die ein Lichtpuls von einem Referenzpunkt über den Oberflächenbereich bis zu einem Fotodetektor zurücklegt. Der Schätzwert muss ausreichend genau sein, dass Gleichung (3) erfüllt ist. Dies kann beispielsweise erreicht werden, indem die Oberfläche zunächst mit einem ungenaueren Verfahren grob vermessen wird und die Ergebnisse der ungenauen Messung als Schätzwerte für eine erneute Vermessung der Oberfläche unter Verwendung des Verfahrens 160 verwendet werden.

Bei einer weiteren Ausgestaltung können Verfahrensschritte des Verfahrens 160 iterativ wiederholt werden, wobei mit zunehmender Anzahl von Iterationen Signalkomponenten mit höherer Frequenz ausgewertet werden. Bei den unter Bezugnahme auf Fig. 1-10 erläuterten Vorrichtungen kann die iterative Wiederholung mit verschiedenen Signalkomponenten durch eine geeignete Ausgestaltung der Auswerteschaltung 15 umgesetzt werden.

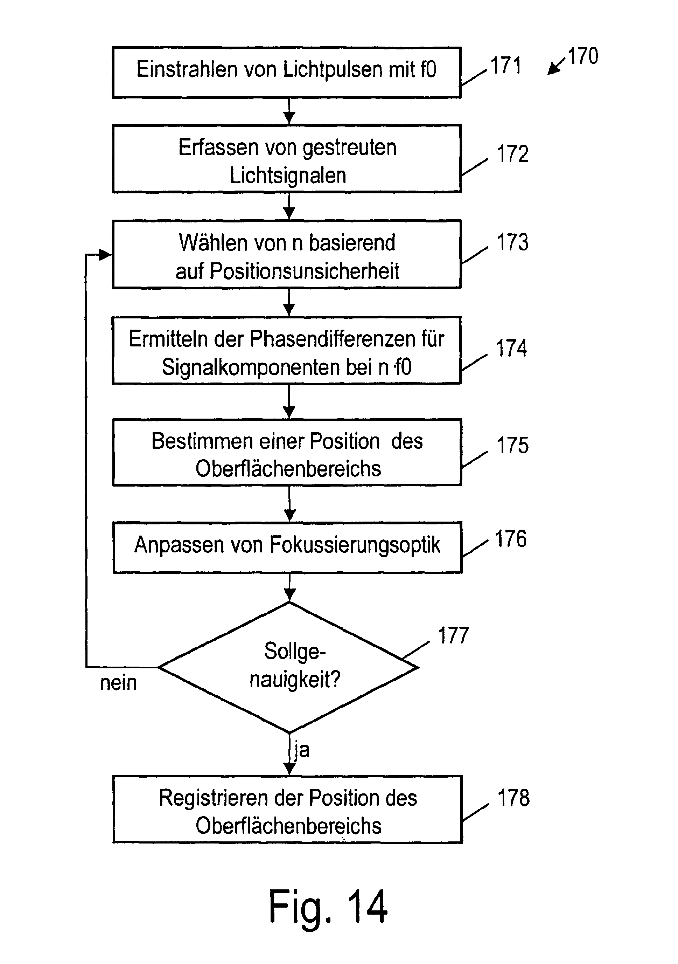

Fig. 14 ist eine Flussdiagrammdarstellung einer Folge von Verfahrenschritten 170, mit denen die Position eines Oberflächenbereichs iterativ besser bestimmbar ist.

Bei 171 und 172 wird, wie bei Schritten 161 und 162 des Verfahrens 160, eine Folge von Lichtpulsen eingestrahlt, und von dem Oberflächenbereich gestreute Folgen von Lichtpulsen werden erfasst.

Bei 173 wird eine natürliche Zahl n ausgewählt, wobei nachfolgend die Phasendifferenz für die Signalkomponente mit Frequenz $n \cdot f0$ ermittelt wird. Die Zahl n wird dabei in Abhängigkeit von der aktuellen Unsicherheit über die von den Lichtpulsen zurückgelegte Weglänge bzw. einer Genauigkeit eines bereits existierenden Schätzwerts für die Weglänge so gewählt, dass Gleichung (3) erfüllt ist. Insbesondere kann bei der ersten Iteration auch $n=1$ sein.

Die nachfolgenden Schritte 174 und 175 sind wie die Schritte 163 und 164 des Verfahrens 160 implementiert, wobei eine verbesserte Schätzung für die von den Lichtpulsen zurückgelegten Weglängen basierend auf den Phasendifferenzen der Signalkomponenten mit Frequenz $n \cdot f0$ von mehreren Lichtsignalen ermittelt wird, und basierend auf der verbesserten Schätzung für die von den Lichtpulsen zurückgelegten Weglängen eine verbesserte Position des Oberflächenbereichs ermittelt wird.

Bei 176 kann eine Fokussierungsoptik basierend auf der verbesserten Schätzung für die Position des Oberflächenbereichs angepasst werden, um den Strahldurchmesser an dem Oberflächenbereich zu verringern und die laterale Auflösung der Oberflächenvermessung zu verbessern.

Bei 177 wird überprüft, ob die Position des Oberflächenbereichs mit ausreichender Genauigkeit bestimmt wurde. Falls bei 177 ermittelt wird, dass die Position des Oberflächenbereichs mit ausreichender Genauigkeit bestimmt wurde, wird bei 178 die zuletzt ermittelte Position des Oberflächenbereichs als ein Messwert für das Vermessen der Oberfläche registriert. Andernfalls werden die Schritte 173-177 wiederholt. Nachdem die Position des Oberflächenbereichs mit ausreichender Genauigkeit bestimmt und registriert wurde, kann die Folge von Verfahrensschritten 170 für andere Oberflächenbereiche wiederholt werden.

Die Vorrichtungen und Verfahren nach verschiedenen Ausführungsbeispielen der Erfindung erlauben eine genaue und berührungslose Bestimmung von Positionen von Oberflächenbereichen bei der Vermessung einer Oberfläche. Die Vorrichtungen und Verfahren können allgemein zum Vermessen von Oberflächen eingesetzt werden, wobei beispielhafte Anwendungsfelder die Vermessung von Räumen zur Digitalisierung der Räume, beispielsweise in Statikanwendungen, oder die quantitative Qualitätssicherung in industriellen Einrichtungen sind.

**Patentansprüche**

1. Vorrichtung zum Vermessen einer Oberfläche (2; 112), umfassend eine Lichtquelle (3) zum Erzeugen einer Folge von Lichtpulsen (61) mit einer Repetitionsrate,

   eine Lichtlenkeinrichtung (4-6; 4, 114; 4, 132, 134), die kontrollierbar ist, um die Folge von Lichtpulsen auf einen Oberflächenbereich (25; 117) der Oberfläche (2; 112) zu lenken, der aus mehreren Oberflächenbereichen (25, 27; 117) wählbar ist,

   eine Detektoranordnung (10; 102; 120; 135), die eingerichtet ist, um wenigstens ein von dem Oberflächenbereich (25; 117) gestreutes und/oder reflektiertes Lichtsignal (21-24; 21-23, 105; 121-123) zu empfangen, und

   eine Auswerteschaltung (15), die mit der Detektoranordnung (10; 102; 120; 135) gekoppelt ist,

   **dadurch gekennzeichnet,**

   **dass** die Detektoranordnung (10; 102; 120; 135) eine Mehrzahl von Detektoren (11-14; 11-13, 104; 11-13) umfasst, die eingerichtet sind, um eine Mehrzahl von von dem Oberflächenbereich (25; 117) in unterschiedliche Richtungen gestreuten Lichtsignalen (21-24; 21-23,105; 121-123) zu empfangen, und

   **dass** die Auswerteschaltung (15) eingerichtet ist, um zum Bestimmen einer Position des Oberflächenbereichs (25; 117) für jedes Lichtsignal (21-24; 21-23, 105; 121-123) der Mehrzahl von Lichtsignalen eine Phasendifferenz zwischen einem aus der Folge von Lichtpulsen abgeleiteten Referenzsignal (19; 86) und einer Signalkomponente (51; 81) des Lichtsignals (21-24; 21-23, 105; 121-123) zu ermitteln, wobei die Signalkomponente (51; 81) jeweils eine Frequenz aufweist, die dem Vielfachen der Repetitionsrate entspricht.

2. Vorrichtung nach Anspruch 1,
   wobei die Lichtlenkeinrichtung (5, 6; 114; 132, 134) kontrollierbar ist, um zum Vermessen der Oberfläche (2; 112) mehrere Folgen von Lichtpulsen sequentiell auf die mehreren Oberflächenbereiche (25, 27; 117) zu lenken.

3. Vorrichtung nach Anspruch 1 oder 2,
   wobei die Detektoranordnung (10; 102; 120; 135) wenigstens drei Detektoren (11-14; 11-13, 104) umfasst und die Auswerteschaltung (15) eingerichtet ist, um basierend auf den ermittelten Phasendifferenzen die Position des Oberflächenbereichs (25; 117) in einem dreidimensionalen Raum zu bestimmen,
   wobei die wenigstens drei Detektoren (11-14; 11-13) vorgegebene Relativpositionen zueinander aufweisen, wobei die Position des Oberflächenbereichs (25; 117) basierend auf den vorgegebenen Relativpositionen bestimmt wird.

4. Vorrichtung nach Anspruch 3,
   wobei die Detektoranordnung (10; 102; 120; 135) wenigstens vier Detektoren (11-14; 11-13, 104) umfasst und die Auswerteschaltung (15) eingerichtet ist, um basierend auf den ermittelten Phasendifferenzen weiterhin eine Weglänge zwischen der Lichtlenkeinrichtung (4-6; 4, 114; 4, 132, 134) und dem Oberflächenbereich (25; 117) zu bestimmen,
   wobei die Lichtlenkeinrichtung (4-6; 4, 114; 4, 132, 134) eine Fokussierungsoptik (17) für die Folge von Lichtpulsen aufweist, die basierend auf der bestimmten Weglänge zwischen der Lichtlenkeinrichtung (4-6; 4, 114; 4, 132, 134) und dem Oberflächenbereich (25; 117) einstellbar ist.

5. Vorrichtung nach einem der vorhergehenden Ansprüche,
   wobei die Lichtlenkeinrichtung ein Handgerät (132) und einen mit dem Handgerät (132) gekoppelten Lichtwellenleiter (134) umfasst, um die Folge von Lichtpulsen von der Lichtquelle (3) zu empfangen und in Richtung des Oberflächenbereichs (25) abzustrahlen.

6. Vorrichtung nach einem der vorhergehenden Ansprüche,
   wobei die Detektoranordnung (10) und die Auswerteschaltung (15) in einem Gerät (135) verbaut sind, wobei eine Mehrzahl von Detektoren (11-14) der Detektoranordnung (10) an einer Seitenfläche (136) eines Gehäuses des Geräts (135) angeordnet sind.

7. Vorrichtung nach einem der vorhergehenden Ansprüche, umfassend wenigstens einen Referenzsignaldetektor (8, 9; 8), der angeordnet ist, um einen Anteil der von der Lichtquelle (3) erzeugten Folge von Lichtpulsen als Referenzsignal (19) zu erfassen, und der mit der Auswerteschaltung (15) gekoppelt ist, um das Referenzsignal (19) an diese bereitzustellen,
   wobei die Auswerteschaltung (15) eingerichtet ist, um die Phasendifferenz als Phasendifferenz zwischen einer Referenzsignalkomponente (54) des Referenzsignals (19) und der Signalkomponente (51) des wenigstens einen Lichtsignals (21-24; 21-23, 105; 121-123) zu ermitteln,
   wobei die Auswerteschaltung (15) einen Mischer (45; 75) zum Mischen der Signalkomponente (51; 81) des wenigstens einen Lichtsignals (21-24; 21-23, 105; 121-123) und einer weiteren Referenzsignalkomponente (52; 82) des Referenzsignals (19) aufweist, deren Frequenz ein weiteres Vielfaches der Repetitionsrate ist.

8. Vorrichtung nach Anspruch 7,
   wobei wenigstens zwei Referenzsignaldetektoren (8, 9) zum Erfassen des Referenzsignals (19) vorgesehen sind, wobei der Mischer (45; 75) eingangsseitig mit einem Referenzsignaldetektor (8) gekoppelt ist, um die weitere Referenzsignalkomponente (52; 82) zu empfangen,
   wobei die Auswerteschaltung (15) einen weiteren Mischer (79) aufweist, der eingangsseitig mit einem Ausgang des Mischers (75) und mit einem weiteren Referenzsignaldetektor (9) gekoppelt ist.

9. Vorrichtung nach einem der vorhergehenden Ansprüche,
   wobei die Auswerteschaltung (15) eingerichtet ist, um iterativ für mehrere Signalkomponenten wenigstens eines Lichtsignals (21-24; 21-23, 105; 121-123) mit unterschiedlicher Frequenz jeweils eine zugeordnete Phasendifferenz zu ermitteln, wobei wenigstens eine der mehreren Signalkomponenten eine Frequenz aufweist, die einem Vielfachen der Repetitionsrate entspricht.

10. Vorrichtung nach einem der vorhergehenden Ansprüche,
    wobei die Detektoranordnung (10; 102; 120; 135) mit wenigstens einem optischen Element, insbesondere einer Linse oder einem Hohlspiegel (141), zum Erhöhen eines an der Detektoranordnung (10; 102; 120; 135) erfassten Signalpegels ausgestattet ist, und/oder wobei die Vorrichtung eine Sperreinrichtung (142-144) umfasst, die eingerichtet ist, um während eines wenigstens basierend auf der Repetitionsrate der Folge von Lichtpulsen bestimmten Zeitintervalls ein Auftreffen von Licht auf die Detektoranordnung (10; 102; 120; 135) und/oder eine Verarbeitung von Signalen durch die Auswerteschaltung (15) zu unterdrücken.

11. Vorrichtung nach einem der vorhergehenden Ansprüche,
    wobei die Lichtquelle einen Kurzpulslaser (3) umfasst.

12. Vorrichtung nach einem der vorhergehenden Ansprüche,
    wobei eine Anzahl der Detektoren (11-14) und eine Anordnung der Detektoren (11-14) der Detektoranordnung (10) derart gewählt ist, dass die Position des Objekts basierend auf den der Mehrzahl von Detektoren zugeordneten Phasendifferenzen bei unbekannter Einstrahlposition des Lichtstrahls (20) ermittelbar ist.

13. Verfahren zum Vermessen einer Oberfläche, wobei sequentiell Positionen von mehreren Oberflächenbereichen (25, 27; 117) der Oberfläche (2; 112) bestimmt werden, wobei das Bestimmen einer Position eines Oberflächenbereichs (25; 117) die folgenden Schritte umfasst:

    Einstrahlen einer Folge von Lichtpulsen mit einer Repetitionsrate auf den Oberflächenbereich (25; 117), Erfassen wenigstens eines Lichtsignals (21-24; 21-23, 105; 121-123), das die an dem Oberflächenbereich (25; 117) gestreute und/oder reflektierte Folge von Lichtpulsen umfasst, und Bestimmen der Position des Oberflächenbereichs (25; 117) basierend auf einer Signalkomponente (51; 81) des wenigstens einen erfassten Lichtsignals (21-24; 21-23, 105; 121-123), wobei die Signalkomponente (51; 81) eine Frequenz aufweist, die einem Vielfachen der Repetitionsrate entspricht,

    **dadurch gekennzeichnet,**
    **dass** zum Bestimmen der Position des Oberflächenbereichs (25; 117) eine Mehrzahl von Lichtsignalen (21-24; 21-23, 105; 121-123), die jeweils die an dem Oberflächenbereich (25; 117) in unterschiedliche Richtungen gestreute Folge von Lichtpulsen umfassen, mit einer Mehrzahl von Detektoren (11-14) erfasst und für jedes Lichtsignal (21-24; 21-23, 105; 121-123) der Mehrzahl von Lichtsignalen eine zugeordnete Phasendifferenz zwischen einem basierend auf der eingestrahlten Folge von Lichtpulsen bestimmten Referenzsignal (19; 86) und einer Signalkomponente (51; 81) des Lichtsignals (21-24; 21-23, 105; 121-123) bestimmt wird, wobei die Signalkomponente (51; 81) jeweils eine Frequenz aufweist, die einem Vielfachen der Repetitionsrate entspricht.

14. Verfahren nach Anspruch 13,
    wobei wenigstens drei von dem Oberflächenbereich (25; 117) in wenigstens drei unterschiedliche Richtungen gestreute Lichtsignale (21-24; 21-23, 105; 121-123) erfasst werden, und wobei basierend auf den ermittelten Phasendifferenzen die Position des Oberflächenbereichs (25; 117) in einem dreidimensionalen Raum bestimmt wird.

15. Verfahren nach Anspruch 13 oder 14,

wobei das Verfahren mit einer Vorrichtung (1; 101; 121; 131) nach einem der Ansprüche 1-12 durchgeführt wird.

**Claims**

1. Device for measuring a surface (2; 112), comprising
   a light source (3) for generating a sequence of light pulses (61) with a repetition rate, a light directing device (4-6; 4, 114; 4, 132, 134) which is controllable to direct said sequence of light pulses onto a surface area (25; 117) of said surface (2; 112) which can be selected from plural surface areas (25, 27; 117),
   a detector arrangement (10; 102; 120; 135) which is configured to receive at least one light signal (21-24; 21-23, 105; 121-123) scattered and/or reflected by said surface area (25; 117), and
   an evaluation circuit (15) coupled to said detector arrangement (10; 102; 120; 135), **characterized in that**
   said detector arrangement (10; 102; 120; 135) comprises a plurality of detectors (11-14; 11-13, 104; 11-13) configured to receive a plurality of light signals (21-24; 21-23, 105; 121-123) scattered by said surface area (25; 117) into different directions, and said evaluation circuit (15) is configured, for determining a position of said surface area (25; 117), to determine, for each light signal (21-24; 21-23, 105; 121-123) of said plurality of light signals, a phase difference between a reference signal (19; 86) derived from said sequence of light pulses and a signal component (51; 81) of said light signal (21-24; 21-23, 105; 121-123), said signal component (51; 81) respectively having a frequency which corresponds to the multiple of said repetition rate.

2. Device according to claim 1,
   said light directing device (5, 6; 114; 132, 134) being controllable to direct plural sequences of light pulses onto said plural surface areas (25, 27; 117) in a sequential manner for measuring said surface (2; 112).

3. Device according to claim 1 or claim 2,
   said detector arrangement (10; 102; 120; 135) comprising at least three detectors (11-14; 11-13, 104) and said evaluation circuit (15) being configured to determine said position of said surface area (25; 117) in a three-dimensional space based on said determined phase differences,
   said at least three detectors (11-14; 11-13) having predetermined positions relative to each other, wherein the position of the surface area (25; 117) is determined based on the predetermined relative positions.

4. Device according to claim 3,
   said detector arrangement (10; 102; 120; 135) comprising at least four detectors (11-14; 11-13, 104) and said evaluation circuit (15) being configured to further determine, based on said determined phase differences, a path length between said light directing device (4-6; 4, 114; 4, 132, 134) and said surface area (25; 117),
   said light directing device (4-6; 4, 114; 4, 132, 134) having a focusing optics (17) for said sequence of light pulses which can be adjusted based on said determined path length between said light directing device (4-6; 4, 114; 4, 132, 134) and said surface area (25; 117).

5. Device according to any one of the preceding claims,
   said light directing device comprising a hand apparatus (132) and an optical fiber (134) coupled to said hand apparatus (132) to receive said sequence of light pulses from said light source (3) and to emit it towards said surface area (25).

6. Device according to any one of the preceding claims,
   said detector arrangement (10) and said evaluation circuit (15) being integrated in an apparatus (135), a plurality of detectors (11-14) of said detector arrangement (10) being arranged on a side face (136) of a housing of said apparatus (135).

7. Device according to any one of the preceding claims, comprising at least one reference signal detector (8, 9; 8) which is arranged to detect a portion of said sequence of light pulses generated by said light source (3) as a reference signal (19) and coupled to said evaluation circuit (15) to provide said reference signal (19) thereto,
   said evaluation circuit (15) being configured to determine said phase difference as a phase difference between a reference signal component (54) of said reference signal (19) and said signal component (51) of said at least one light signal (21-24; 21-23, 105; 121-123),
   said evaluation circuit (15) having a mixer (45; 75) for mixing said signal component (51; 81) of said at least one light signal (21-24; 21-23, 105; 121-123) and a further reference signal component (52; 82) of said reference signal (19), a frequency of which further reference signal component is another multiple of said repetition rate.

**8.** Device according to claim 7,
wherein at least two reference signal detectors (8, 9) for detecting said reference signal (19) are provided, said mixer (45; 75) being coupled, at an input side, to a reference signal detector (8) to receive said further reference signal component (52; 82), said evaluation circuit (15) having a further mixer (79) which is coupled, at an input side, to an output of said mixer (75) and to a further reference signal detector (9).

**9.** Device according to any one of the preceding claims,
said evaluation circuit (15) being configured to determine, in an iterative manner, for plural signal components of at least one light signal (21-24; 21-23, 105; 121-123) having different frequencies respectively an associated phase difference, at least one of said plural signal components having a frequency which corresponds to a multiple of said repetition rate.

**10.** Device according to any one of the preceding claims,
wherein said detector arrangement (10; 102; 120; 135) is provided with at least one optical element, in particular a lens or a concave mirror (141), for increasing a signal level detected at said detector arrangement (10; 102; 120; 135) and/or
wherein said device comprises a blocking device (142-144) configured to suppress incidence of light onto said detector arrangement (10; 102; 120; 135) and/or processing of signals by said evaluation circuit (15) during a time interval which is determined based at least on said repetition rate of said sequence of light pulses.

**11.** Device according to any one of the preceding claims,
said light source comprising a short pulse laser (3).

**12.** Device according to any one of the preceding claims,
wherein a number of said detectors (11-14) and an arrangement of said detectors (11-14) of said detector arrangement (10) are selected such that said position of said object can be determined based on said phase differences associated with said plurality of detectors when an irradiation position of said light beam (20) is unknown.

**13.** Method of measuring a surface, wherein positions of plural surface areas (25, 27; 117) of said surface (2; 112) are determined in a sequential manner, wherein determining a position of a surface area (25; 117) comprises the following steps:

irradiating a sequence of light pulses with a repetition rate onto said surface area (25; 117),
detecting at least one light signal (21-24; 21-23, 105; 121-123) which includes said sequence of light pulses scattered and/or reflected on said surface area (25; 117), and
determining said position of said surface area (25; 117) based on a signal component (51; 81) of said at least one detected light signal (21-24; 21-23, 105; 121-123), said signal component (51; 81) having a frequency which corresponds to a multiple of said repetition rate,

**characterized in that**
in order to determine said position of said surface area (25; 117), a plurality of light signals (21-24; 21-23, 105; 121-123) which each include said sequence of light pulses scattered on said surface area (25; 117) in different directions are detected with a plurality of detectors (11-14) and, for each light signal (21-24; 21-23, 105; 121-123) of said plurality of light signals, an associated phase difference between a reference signal (19; 86), which is determined based on said irradiated sequence of light pulses, and a signal component (51; 81) of said light signal (21-24; 21-23, 105; 121-123) is determined, said signal component (51; 81) respectively having a frequency which corresponds to a multiple of said repetition rate.

**14.** Method according to claim 13,
wherein at least three light signals (21-24; 21-23, 105; 121-123) scattered by said surface area (25; 117) into at least three different directions are detected, and wherein said position of said surface area (25; 117) is determined in a three-dimensional space based on said determined phase differences.

**15.** Method according to claim 13 or claim 14,
said method being performed with a device (1; 101; 121; 131) according to any one of claims 1-12.

**Revendications**

1. Dispositif servant à mesurer une surface (2 ; 112), comprenant une source lumineuse (3) servant à produire une séquence d'impulsions lumineuses (61) présentant un taux de répétition donné,

un système de guidage de lumière (4 - 6 ; 4, 114 ; 4, 132, 134), qui peut être contrôlé afin de diriger la séquence d'impulsions lumineuses sur une zone de surface (25 ; 117) de la surface (2 ; 112), laquelle zone de surface peut être choisie parmi plusieurs zones de surface (25, 27 ; 117),

un ensemble de détecteurs (10 ; 102 ; 120 ; 135), qui est mis au point pour recevoir au moins un signal lumineux diffusé et/ou réfléchi par la zone de surface (25 ; 117), et

un circuit d'analyse (15), qui est couplé à l'ensemble de détecteurs (10 ; 102 ; 120 ; 135),

**caractérisé en ce**

**que** l'ensemble de détecteurs (10 ; 102 ; 120 ; 135) comprend une multitude de détecteurs (11 - 14 ; 11 - 13, 104 ; 11 - 13), qui sont mis au point pour recevoir une multitude de signaux lumineux (21 -24 ; 21 - 23, 105 ; 121 - 123) diffusés dans diverses directions par la zone de surface (25 ; 117), et

en ce que le circuit d'analyse (15) est mis au point afin de déterminer une différence de phase entre un signal de référence (19 ; 86) déduit de la séquence d'impulsions lumineuses et une composante de signal (51 ; 81) du signal lumineux (21 - 24 ; 21 - 23, 105 ; 121 - 123) afin de définir une position de la zone de surface (25 ; 117) pour chaque signal lumineux (21 -24 ; 21 - 23, 105 ; 121 - 123) de la multitude de signaux lumineux, sachant que la composante de signal (51 ; 81) présente respectivement une fréquence, qui correspond au multiple du taux de répétition.

2. Dispositif selon la revendication 1,

sachant que le système de guidage de lumière (5, 6 ; 114 ; 132, 134) peut être contrôlé afin de diriger plusieurs séquences d'impulsions lumineuses de manière séquentielle sur les nombreuses zones de surface (25, 27 ; 117) afin de mesurer la surface (2 ; 112).

3. Dispositif selon la revendication 1 ou 2, sachant que l'ensemble des détecteurs (10 ; 102 ; 120 ; 135) comprend au moins trois détecteurs (11 - 14 ; 11 - 13, 104) et que le circuit d'analyse (15) est mis au point afin de définir, sur la base des différences de phase déterminées, la position de la zone de surface (25 ; 117) dans un espace tridimensionnel,

sachant que les trois détecteurs (11 - 14 ; 11 - 13) ou plus présentent les uns par rapport aux autres des positions relatives spécifiées, sachant que la position de la zone de surface (25 ; 117) est définie sur la base des positions relatives spécifiées.

4. Dispositif selon la revendication 3,

sachant que l'ensemble des détecteurs (10 ; 102 ; 120 ; 135) comprend au moins quatre détecteurs (11-14 ; 11-13, 104) et que le circuit d'analyse (15) est mis au point afin de définir sur la base des différences de phase déterminées par ailleurs une longueur de trajet entre le système de guidage de lumière (4 - 6, 114 ; 4, 132, 134) et la zone de surface (25 ; 117),

sachant que le système de guidage de lumière (4 - 6, 114 ; 4, 132, 134) présente une optique de focalisation (17) pour la séquence d'impulsions lumineuses, qui peut être réglée sur la base de la longueur de trajet définie entre le système de guidage de lumière (4 - 6 ; 4, 114 ; 4, 132, 134) et la zone de surface (25 ; 117).

5. Dispositif selon l'une quelconque des revendications précédentes,

sachant que le système de guidage de lumière comprend un appareil manuel (132) et un guide d'ondes lumineuses (134) couplé à l'appareil manuel (132) afin de recevoir de la source lumineuse (3) la séquence d'impulsions lumineuses et de l'émettre en direction de la zone de surface (25).

6. Dispositif selon l'une quelconque des revendications précédentes,

sachant que l'ensemble des détecteurs (10) et le circuit d'analyse (15) sont assemblés dans un appareil (135), sachant qu'une multitude de détecteurs (11 - 14) de l'ensemble des détecteurs (10) sont disposés au niveau d'une face latérale (136) d'un boîtier de l'appareil (135).

7. Dispositif selon l'une quelconque des revendications précédentes, comprenant

au moins un détecteur de signal de référence (8, 9 ; 8), qui est disposé afin de détecter une fraction de la séquence d'impulsions lumineuses produite par la source lumineuse (3) en tant que signal de référence (19), et qui est couplé au circuit d'analyse (15) afin de fournir à ce dernier le signal de référence (19),

sachant que le circuit d'analyse (15) est mis au point afin de déterminer la différence de phase en tant que différence de phase entre une composante de signal de référence (54) du signal de référence (19) et la composante de signal (51) du signal lumineux (21 - 24 ; 21 - 23, 105 ; 121- 123) au moins au nombre de un,
sachant que le circuit d'analyse (15) présente un mélangeur (45 ;75) servant à mélanger la composante de signal (51 ; 81) du signal lumineux (21 - 24 ; 21 -23, 105 ; 121 - 123) au moins au nombre de une et une autre composante de signal de référence (52 ; 82) du signal de référence (19), dont la fréquence est un autre multiple du taux de répétition.

8.  Dispositif selon la revendication 7,
    sachant qu'au moins deux détecteurs de signal de référence (8, 9) servant à détecter le signal de référence (19) sont prévus, sachant que le mélangeur (45 ; 75) est couplé côté entrée à un détecteur de signal de référence (8) afin de recevoir l'autre composante de signal de référence (52 ; 82),
    sachant que le circuit d'analyse (15) présente un autre mélangeur (79), qui est couplé côté entrée à une sortie du mélangeur (75) et à un autre détecteur de signal de référence (9).

9.  Dispositif selon l'une quelconque des revendications précédentes,
    sachant que le circuit d'analyse (15) est mis au point afin de déterminer par itération, pour plusieurs composantes de signal d'au moins un signal lumineux (21 - 24 ; 21 - 23, 105 ; 121 - 123) présentant une fréquence différente, respectivement une différence de phase associée, sachant qu'au moins une des nombreuses composantes de signal présente une fréquence, qui correspond à un multiple du taux de répétition.

10. Dispositif selon l'une quelconque des revendications précédentes,
    sachant que l'ensemble des détecteurs (10 ; 102 ; 120 ; 135) est configuré avec au moins un élément optique, en particulier une lentille ou un miroir concave (141), afin d'augmenter un niveau de signal détecté au niveau de l'ensemble de détecteurs (10 ; 102 ; 120 ; 135), et/ou sachant que le dispositif comprend un système de blocage (142 -144), qui est mis au point afin d'empêcher, au cours d'un laps de temps défini sur la base du taux de répétition de la séquence d'impulsions lumineuses, toute arrivée de lumière sur l'ensemble de détecteurs (10 ; 102 ; 120 ; 135) et/ou tout traitement de signaux par le circuit d'analyse (15).

11. Dispositif selon l'une quelconque des revendications suivantes,
    sachant que la source lumineuse comprend un laser à impulsions courtes (3).

12. Dispositif selon l'une quelconque des revendications précédentes,
    sachant qu'un nombre des détecteurs (11 -14) et un agencement des détecteurs (11 -14) de l'ensemble de détecteurs (10) sont choisis de telle manière que la position de l'objet peut être déterminée sur la base des différences de phase associées à la multitude de détecteurs dans le cas d'une position d'irradiation non connue du rayon lumineux (20).

13. Procédé servant à mesurer une surface, sachant que des positions de plusieurs zones de surface (25, 27 ; 117) de la surface (2 ; 112) sont définies de manière séquentielle, sachant que la définition d'une position d'une zone de surface (25 ; 117) comprend les étapes suivantes consistant à :

    irradier une séquence d'impulsions lumineuses selon un taux de répétition sur la zone de surface (25 ; 117) ;
    détecter au moins un signal lumineux (21 -24 ; 21 - 23, 105 ; 121 - 123), qui comprend la séquence d'impulsions lumineuses diffusée et/ou réfléchie au niveau de la zone de surface (25 ; 117) ; et
    définir la position de la zone de surface (25 ; 117) sur la base d'une composante de signal (51 ; 81) du signal lumineux (21 -24 ; 21 -23, 105 ; 121 -123) détecté au moins au nombre de un, sachant que la composante de signal (51 ; 81) présente une fréquence, qui correspond à un multiple du taux de répétition,

    **caractérisé en ce**
    **qu'**une multitude de signaux lumineux (21 - 24 ; 21 - 23, 105 ; 121 - 123), qui comprennent respectivement la séquence d'impulsions lumineuses diffusée dans différentes directions au niveau de la zone de surface (25 ; 117), sont détectés à l'aide d'une multitude de détecteurs (11 - 14) afin de définir la position de la zone de surface (25 ; 117), et en ce que pour chaque signal lumineux (21 - 24 ; 21 - 23, 105 ; 121 - 123) de la multitude de signaux lumineux, une différence de phase associée entre un signal de référence (19 ; 86) défini sur la base de la séquence irradiée d'impulsions lumineuses et une composante de signal (51 ; 81) du signal lumineux (21 - 24 ; 21 - 23, 105 ; 121 - 123) est définie, sachant que la composante de signal (51 ; 81) présente respectivement une fréquence, qui correspond à un multiple du taux de répétition.

14. Procédé selon la revendication 13,

sachant qu'au moins trois signaux lumineux (21 - 24 ; 21 - 23, 105 ; 121 - 123) diffusés par la zone de surface (25 ; 117) dans au moins trois directions différentes sont détectés, et sachant que la position de la zone de surface (25 ; 117) est définie sur la base des différences de phase déterminées dans un espace tridimensionnel.

15. Procédé selon la revendication 13 ou 14,
sachant que le procédé est mis en oeuvre avec un dispositif (1 ; 101 ; 121 ; 131) selon l'une quelconque des revendications 1 à 12.

Fig. 1

Fig. 2 A

Fig. 2 B

Fig. 3

Fig. 4 A

Fig. 4 B

Fig. 5

Fig. 6

Fig. 7

EP 2 321 614 B1

Fig. 8

Fig. 9

Fig. 10

Fig. 11

Fig. 12

160

Einstrahlen von Lichtpulsen mit f0 auf Oberflächenbereich — 161

Erfassen von gestreuten Lichtsignalen — 162

Ermitteln der Phasendifferenzen für Signalkomponenten bei n·f0 — 163

Bestimmen einer Position des Oberflächenbereichs — 164

Auswählen eines anderen Oberflächenbereichs — 165

Fig. 13

```
┌─────────────────────────────────┐
│  Einstrahlen von Lichtpulsen mit f0  │──171        ↙170
└─────────────────────────────────┘
              │
              ▼
┌─────────────────────────────────┐
│    Erfassen von gestreuten       │──172
│       Lichtsignalen              │
└─────────────────────────────────┘
              │
              ▼
┌─────────────────────────────────┐
│     Wählen von n basierend       │──173
│    auf Positionsunsicherheit     │
└─────────────────────────────────┘
              │
              ▼
┌─────────────────────────────────┐
│  Ermitteln der Phasendifferenzen für  │──174
│   Signalkomponenten bei n·f0     │
└─────────────────────────────────┘
              │
              ▼
┌─────────────────────────────────┐
│   Bestimmen einer Position des   │──175
│       Oberflächenbereichs        │
└─────────────────────────────────┘
              │
              ▼
┌─────────────────────────────────┐
│   Anpassen von Fokussierungsoptik  │──176
└─────────────────────────────────┘
              │
              ▼
            ◇ Sollge-
    nein    ◇ nauigkeit? ◇──177
              │
              │ ja
              ▼
┌─────────────────────────────────┐
│   Registrieren der Position des  │──178
│       Oberflächenbereichs        │
└─────────────────────────────────┘
```

# Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1903302 A2
- DE 112005001980 T5
- US 4856893 A
- US 4818100 A

**In der Beschreibung aufgeführte Nicht-Patentliteratur**

- **K. MINOSHIMA ; H. MATSUMOTO.** High-accuracy measurement of 240-m distance in an optical tunnel by use of a compact femtosecond laser. *Applied Optics,* 2000, vol. 39 (30), 5512-5517